# FASCICULE DE BREVET EUROPEEN

(11) **EP 1 217 283 B1**
(45) Date de publication et mention de la délivrance du brevet: **19.04.2006**
(21) Numéro de dépôt: 01403338.5
(22) Date de dépôt: 21.12.2001
(51) Int. Cl.: F16L 25/00

(54) **Tuyau ou analogue; bague d'about femelle et procédé de fabrication d'un tel tuyau ou analogue**
Rohr oder ähnliches; weiblicher Abschlussring und Herstellungsverfahren eines solchen Rohres oder ähnlichem
Tube or similar; female endring and method for fabricating such a tube or similar

(30) Priorité: 22.12.2000 FR 0016911
(43) Date de publication de la demande: 26.06.2002
(73) Titulaire: Bonna Sabla, 92800 Puteaux (FR)
(72) Inventeur: Leblanc, François Charles, 92000 Nanterre (FR)
(74) Mandataire: Texier, Christian

(56) Documents cités:
- CH-A- 364 667
- DE-U- 20 016 118
- DE-U- 29 711 027
- FR-A- 2 292 918
- US-A- 4 703 940
- US-A- 5 180 196
- US-A- 5 951 812

## Description

La présente invention concerne un tuyau ou analogue, du type comportant :
- un fût en béton présentant au moins une extrémité annulaire d'axe longitudinal déterminé, notamment délimitée par une face périphérique extérieure longitudinale et par une face frontale transversale,
- une bague d'about femelle, coaxiale à ladite extrémité et solidaire de celle-ci, constituant
   → d'une part une virole longitudinale de solidarisation avec le fût, notamment délimitée par une face périphérique intérieure longitudinale épousant ladite face périphérique extérieure à proximité immédiate de ladite face frontale et
   → d'autre part une jupe longitudinale formant une saillie longitudinale sur ladite face frontale pour s'emboîter coaxialement sur un about mâle d'un autre tuyau ou analogue.

On considère ici comme analogues à des tuyaux tous les conduits et éléments de construction assemblables par emboîtement tels que galeries, regards de visite, conduits emboîtables dits "ovoïdes", conduits du type commercialisé sous la marque enregistrée "MODULOVALE" et modules d'abris, ces exemples n'étant nullement limitatifs, dès lors que ladite face périphérique extérieure présente, de façon habituelle ou par suite d'une adaptation simple en vue de la mise en oeuvre de la présente invention, une section transversale courbe, convexe.

De même, le terme "béton" doit être entendu ici dans son sens le plus général, englobant notamment aussi bien les bétons de résine que les bétons à liant minéral.

Dans l'état actuel de la technique, on réalise le plus souvent la solidarisation de la bague d'about femelle, en métal ou en matière synthétique, avec le fût en surmoulant directement celui-ci sur la virole. Une telle technique est décrite par exemple, dans le cas d'une bague d'about femelle en matière synthétique, dans la demande de brevet britannique N° 2 217 418, qui évoque également la possibilité de fixer la bague sur le fût après la fabrication de celui-ci, probablement par scellement en raison de la complexité de certaines formes décrites.

La solidarisation ainsi obtenue entre la bague d'about femelle et le fût peut être satisfaisante, si l'on prend la précaution de conformer la virole de façon à obtenir un ancrage mutuel par complémentarité de forme, mais quelles que soient les précautions prises à cet égard, l'étanchéité entre la virole et le fût reste problématique, même si on se limite à définir l'étanchéité comme une absence de suintement visible d'un liquide placé à une pression proche de la pression ambiante, d'un côté à l'autre du joint entre la virole et le fût.

On a également proposé, dans le brevet américain N° 5 180 196, à savoir plus précisément en référence à la figure 6 de ce document, de réaliser un about femelle sur un fût longitudinal en béton en emboîtant longitudinalement une zone, formant une virole, d'une bague longitudinale d'about femelle sur une face périphérique extérieure d'une extrémité annulaire du fût dans des conditions telles qu'une autre zone de la bague forme une jupe en saillie longitudinale sur une face frontale du fût, pour recevoir intérieurement un tuyau de conception différente.

L'étanchéification de la virole de la bague d'about femelle vis-à-vis de la face périphérique extérieure de l'extrémité du fût est alors assurée par deux frettes annulaires transversales serrées par vis, qui entourent localement la virole et la pressent localement sur la face périphérique extérieure de l'extrémité du fût, en assurant également ainsi une solidarisation mutuelle, par friction, de la bague d'about femelle et du fût.

Le recours à de telles frettes peut limiter les applications d'un tuyau ou analogue ainsi réalisé, en ce sens que leur matériau constitutif, dont le choix est dicté par des considérations d'ordre mécanique, peut être incompatible avec certaines conditions d'implantation du tuyau ou analogue. Ainsi, on choisit le plus souvent, pour la réalisation de frettes, des aciers dont la nuance est sélectionnée en fonction de critères de résistance à la traction et de module d'élasticité, mais de tels aciers sont généralement vulnérables à la corrosion et par conséquent inutilisables, à moins de traitements et/ou protections supplémentaires anticorrosion, coûteux et d'une efficacité limitée dans le temps, dans le cas de tuyaux ou analogues destinés à être enterrés.

En outre, l'efficacité de l'étanchéification et de la solidarisation entre la virole de la bague d'about femelle et la face périphérique extérieure de l'extrémité du fût est alors conditionnée par la valeur de la pression d'appui mutuel transversal, elle-même conditionnée par la valeur d'une pression transversale que les frettes annulaires appliquent à la virole, par l'extérieur de celle-ci, en conséquence d'une tension circonférentielle que l'on donne aux frettes annulaires par vissage.

Or, la pression appliquée par les frettes à la virole ne se traduit par une pression d'appui transversal de la virole de la bague d'about femelle sur la face périphérique extérieure de l'extrémité du fût qu'à travers la virole, à la condition d'entraîner coercitivement une tendance de celle-ci à retrécir sur la face périphérique extérieure de l'extrémité du fût, à partir d'une configuration de repos dans laquelle elle a été emboîtée sur cette face périphérique extérieure.

La virole oppose une résistance naturelle à un tel rétrécissement à partir de sa configuration de repos si bien que l'obtention d'une pression d'appui mutuel transversal, entre la virole de la bague d'about femelle et la face périphérique extérieure du fût, d'une valeur suffisante pour assurer une étanchéification mutuelle efficace, ainsi qu'une solidarisation mutuelle efficace, nécessite de développer une pression d'une valeur considérable entre les frettes et la virole, par mise en tension circonférentielle des frettes, au risque de provoquer un endommagement irrémédiable de la virole.

En pratique, le souci d'éviter le risque d'un tel endommagement conduit à limiter la valeur de la tension circonférentielle des frettes et de la pression qu'elles appliquent à la virole, et la résistance que cette dernière oppose à un rétrécissement se traduit par une valeur encore inférieure de la pression d'appui transversal de la virole sur la face périphérique extérieure du fût, c'est-à-dire non seulement par une solidarisation mutuelle peu efficace mais encore par une étanchéification mutuelle douteuse.

Le but de la présente invention est de remédier à cet inconvénient et, à cet effet, la présente invention propose un tuyau ou analogue selon la revendication 1, une bague d'about femelle selon la revendication 13 et un procédé selon la revendication 20.

Des caractéristiques avantageuses sont définies par les revendications dépendantes.

La pression transversale crée entre la virole de la bague, celle-ci soit métallique ou en matière synthétique, et le fût un contact beaucoup plus intime que dans l'art antérieur, et ce contact intime améliore considérablement l'étanchéification mutuelle.

En fonction des géométries respectives de la face périphérique intérieure de la virole et de la face périphérique extérieure du fût, et du coefficient de frottement relatif, ladite tension élastique circonférentielle peut en outre être telle que ladite face périphérique intérieure soit au moins pour partie solidarisée avec ladite face périphérique extérieure par effet de friction mutuelle résultant de ladite pression transversale, cet effet pouvant être renforcé par serrage de la virole sur la face périphérique extérieure du fût, au moyen d'au moins une frette entourant coaxialement la virole et placée en tension circonférentielle, lorsqu'une telle frette est techniquement envisageable, en particulier au vu des conditions d'installation du tuyau ou analogue.

Dans un tel cas, au contraire de ce qui se produit dans le cas d'un about femelle réalisé conformément aux enseignements du brevet américain N° 5 180 196, la frette n'est qu'optionnelle et ne vient que compléter si nécessaire une tendance naturelle de la virole, placée en état de tension élastique circonférentielle sur la face périphérique extérieure du fût, à s'appliquer par élasticité sur cette face périphérique extérieure en tendant à créer une étanchéité mutuelle et, le cas échéant, une solidarisation mutuelle. Ainsi, au lieu de jouer des rôles antagonistes à cet égard, la virole et la frette jouent des rôles complémentaires dans le cas d'un tuyau ou analogue selon l'invention, et la valeur de la pression que la frette doit appliquer à la virole pour atteindre une valeur requise de la pression de contact mutuel transversal entre la virole et la face périphérique extérieure de l'extrémité du fût peut rester considérablement plus faible que dans le cas d'un tuyau ou analogue conforme aux enseignements du brevet américain précité.

Un tel tuyau selon l'invention peut être fabriqué par un procédé comportant une étape initiale consistant à préfabriquer une bague d'about femelle elle-même caractéristique de l'invention.

Ce procédé, également caractéristique de la présente invention, comporte entre autres la succession des étapes consistant à :
a) préfabriquer le fût indépendamment de la bague, la bague étant conforme à la présente invention et dimensionnée de telle sorte que, à une distance longitudinale déterminée de la transition entre la virole et la jupe et en l'absence d'extension circonférentielle de la bague, ladite face périphérique intérieure présente des dimensions transversales inférieures à celles que ladite face périphérique extérieure présente à la même distance longitudinale de ladite face frontale, mais suffisamment proches de celles-ci pour pouvoir être augmentées jusqu'à celles-ci par mise en tension élastique circonférentielle de la virole,
b) engager coaxialement la virole sur l'extrémité annulaire du fût jusqu'à une position relative déterminée dans laquelle ladite transition coïncide longitudinalement avec ladite face frontale, et solidariser la virole avec le fût dans ladite position relative déterminée en plaçant la virole dans un état de tension élastique circonférentielle d'étanchéification vis-à-vis de ladite face périphérique extérieure par application à celle-ci, par ladite face périphérique intérieure, d'une pression transversale répartie circonférentiellement de façon continue.

Lorsque sont remplies les conditions précitées pour que ladite tension élastique circonférentielle soit telle que ladite face périphérique intérieure soit au moins pour partie solidarisée avec ladite face périphérique extérieure par un effet de friction mutuelle résultant de ladite pression transversale, on peut renforcer cet effet par frettage de la virole dans ladite position relative déterminée.

On peut mettre en oeuvre l'étape b) en emmanchant coaxialement à force la bague, par sa virole, sur l'extrémité annulaire du fût. Cette opération peut être facilitée si, respectivement lors de l'étape initiale et lors de l'étape a), on préfabrique la bague et le fût de telle sorte que ladite face périphérique extérieure et/ou ladite face périphérique intérieure soient évasées par rapport à l'axe longitudinal respectif, dans le sens longitudinal d'un éloignement par rapport à ladite face frontale et par rapport à la transition entre la virole et la jupe, respectivement, de préférence en faisant en sorte que ladite face périphérique extérieure soit plus évasée que ladite face périphérique intérieure par rapport à l'axe longitudinal respectif, ce qui permet de rendre l'emmanchement progressif. On peut également faciliter un tel emmanchement en intercalant entre lesdites faces périphériques intérieure et extérieure un lubrifiant qui facilite cette opération.

La présence d'un tel lubrifiant affaiblit cependant l'effet de solidarisation mutuelle, par friction, qui peut résulter de la tension élastique circonférentielle de la virole et on préfère un mode de mise en oeuvre de l'étape b), caractérisé en ce que l'on facilite l'engagement coaxial de la virole sur l'extrémité annulaire du fût, lors de l'étape b), en plaçant la virole dans un état d'extension circonférentielle supérieure à celle qui correspond audit état de tension élastique circonférentielle jusqu'à ce que ladite position relative soit atteinte, et en ce que l'on laisse la virole quitter ledit état d'extension circonférentielle pour laisser s'établir ladite pression transversale lorsque ladite position relative est atteinte.

Par exemple, on place la virole dans ledit état d'extension circonférentielle par des moyens choisis dans un groupe comportant les moyens mécaniques et les moyens thermiques.

Diverses dispositions peuvent être adoptées pour augmenter l'effet d'étanchéification mutuelle et, le cas échéant, de solidarisation mutuelle par application de la face périphérique intérieure de la virole sous pression transversale sur la face périphérique extérieure du fût.

En particulier, ladite face périphérique intérieure présente au moins un relief annulaire continu d'étanchéité vis-à-vis de ladite face périphérique extérieure, en état de compression élastique et/ou plastique transversale contre celle-ci, constituant une seule pièce avec la virole.

En particulier, lorsque ladite face périphérique extérieure et/ou ladite face périphérique intérieure sont évasées dans le sens longitudinal d'un éloignement par rapport à ladite face frontale et par rapport à la transition entre la virole et la jupe, notamment aux fins de faciliter la mise en place de la virole sur le fût, ledit relief annulaire continu, au nombre d'au moins un, présente la forme d'un godron.

On entend ici par "godron" un relief présentant une forme massive lorsqu'il est vu en coupe par un plan incluant l'axe, et notamment un relief formé par un gradin de la face périphérique intérieure de la virole, et propre à travailler essentiellement par compression contre la face périphérique extérieure du fût pour augmenter localement, selon un anneau continu, la pression transversale de contact mutuel de la face périphérique intérieure de la virole et de la face périphérique extérieure du fût, aux fins d'améliorer l'étanchéité relative, par opposition à une lèvre d'étanchéité, travaillant à cet effet essentiellement en flexion grâce à une conformation élancée lorsqu'elle est vue en coupe par un plan incluant l'axe du fût.

Un homme du métier comprendra aisément que la présence d'au moins un relief annulaire continu d'étanchéité sur la face périphérique intérieure de la virole peut augmenter également l'effet de solidarisation de cette dernière avec le fût, lorsque sont remplies les conditions précitées pour que la face périphérique intérieure de la virole soit solidarisée avec la face périphérique extérieure du fût, au moins pour partie, par effet de friction mutuelle.

Cependant, si la pression transversale entre la face périphérique intérieure de la virole et la face périphérique extérieure du fût est insuffisante pour procurer à elle seule la solidarisation mutuelle, ladite face périphérique intérieure est solidarisée avec ladite face périphérique extérieure par un collage mutuel annulaire, notamment continu, lequel améliore alors en outre l'étanchéité mutuelle.

Un mode de mise en oeuvre préféré du procédé selon l'invention, à cet effet, se caractérise en ce que, entre les étapes a) et b), on dépose un anneau, notamment continu, de colle sur une zone localisée de ladite face périphérique extérieure et/ou de ladite face périphérique intérieure, choisie de telle sorte que, lors de la mise en oeuvre de l'étape b) et par la suite, cette zone constitue une zone de contact mutuel, par l'intermédiaire de ladite colle, et d'application de ladite pression transversale.

Aux fins d'améliorer cette étanchéité, on peut également prévoir que le tuyau ou analogue selon l'invention comporte au moins un anneau continu d'un matériau plastique d'étanchéité, interposé entre ladite face périphérique intérieure et ladite face périphérique extérieure.

Un mode de mise en oeuvre préféré du procédé selon l'invention, à cet effet, se caractérise en ce que, entre les étapes a) et b), on met en place sur ladite face périphérique extérieure et/ou ladite face périphérique intérieure au moins un anneau continu d'un matériau plastique d'étanchéité, et en ce que, lors de l'étape b), on provoque l'écrasement et/ou le fluage dudit matériau plastique d'étanchéité entre ladite face périphérique intérieure et ladite face périphérique extérieure.

Aux mêmes fins d'améliorer ladite étanchéité, on peut également prévoir que le tuyau ou analogue selon l'invention comporte une garniture annulaire d'un matériau élastiquement compressible d'étanchéité, interposée en contrainte de compression transversale élastique entre ladite face périphérique intérieure et ladite face périphérique extérieure, au moins à proximité immédiate de ladite face frontale.

Un mode de mise en oeuvre préféré du procédé selon l'invention, à cet effet, se caractérise en ce que, entre les étapes a) et b), on met en place sur ladite face périphérique extérieure une garniture d'un matériau élastiquement compressible d'étanchéité au moins à proximité immédiate de ladite face frontale, et en ce que, lors de l'étape b), on met ladite garniture en contrainte de compression transversale élastique entre ladite face périphérique intérieure et ladite face périphérique extérieure.

De préférence, ladite face périphérique extérieure présente un décrochement annulaire localisé au moins à proximité immédiate de ladite face frontale et ladite garniture est logée, sur une partie de sa dimension transversale, dans ledit décrochement.

Ceci permet d'assurer une retenue efficace de la garniture d'étanchéité sur la face périphérique extérieure du fût notamment avant et pendant la mise en place de la virole sur celui-ci, et de bénéficier pour la garniture d'étanchéité d'une épaisseur plus grande, augmentant sa résistance mécanique notamment au cisaillement entre la face périphérique extérieure du fût et la face périphérique intérieure de la virole, et autorisant une course de compression élastique plus importante, favorable à l'adaptation de la garniture d'étanchéité notamment à l'état de surface de la face périphérique extérieure du fût, avec pour conséquence une étanchéité améliorée. Le décrochement localisé de la face périphérique extérieure de l'extrémité annulaire du fût est avantageusement réalisé lors de la préfabrication de celui-ci, à l'étape a) du procédé selon l'invention, et l'on met en place ladite garniture entre les étapes a) et b) en la logeant, sur une partie de sa dimension transversale, dans ledit décrochement.

Cependant, ladite garniture peut avantageusement présenter la forme d'une pellicule et, en particulier, d'une pellicule qui s'étend, à partir de ladite face frontale, sur une dimension longitudinale inférieure aux dimensions longitudinales respectives de ladite face périphérique extérieure et de ladite face périphérique intérieure.

Pour augmenter la solidarisation mutuelle de la virole et du fût, la face périphérique intérieure de la virole peut être solidarisée avec la pellicule constituant la garniture d'étanchéité par un collage mutuel annulaire, notamment continu, qui améliore alors également leur étanchéité relative. A cet effet, entre les étapes a) et b) du procédé selon l'invention et après avoir mis en place ladite pellicule, on dépose un anneau, notamment continu, de colle sur une zone localisée de ladite pellicule et/ou de ladite face périphérique intérieure, choisie de telle sorte que, lors de la mise en oeuvre de l'étape b) et par la suite, cette zone constitue une zone de contact mutuel, par l'intermédiaire de ladite colle, et d'application de ladite pression transversale.

Avantageusement, si la mise en place de la virole de la bague sur le fût s'effectue par engagement coaxial, progressif, à force de la virole sur l'extrémité annulaire de ce fût, la colle utilisée pour assurer la solidarisation de la face périphérique intérieure de la virole avec la pellicule précitée et/ou pour assurer la solidarisation mutuelle de la face périphérique intérieure de la virole et de la face périphérique extérieure du fût est avantageusement choisie de telle sorte qu'elle constitue à l'état frais un lubrifiant facilitant cet engagement coaxial, progressif, à force, tout en étant apte à assurer ensuite la solidarisation mutuelle recherchée.

On peut choisir et disposer la pellicule précitée, destinée à constituer une garniture d'étanchéité entre la face périphérique extérieure du fût et la face périphérique intérieure de la virole, de telle sorte qu'elle présente au repos une épaisseur sensiblement constante, ou encore de telle sorte qu'elle présente au moins une surépaisseur annulaire continue, longitudinalement espacée de ladite face frontale d'une distance inférieure aux dimensions longitudinales respectives de ladite face périphérique extérieure et de ladite face périphérique intérieure et provoquant un surcroît, longitudinalement localisé, de ladite tension et de ladite pression.

A cette surépaisseur annulaire continue peut avantageusement correspondre une gorge annulaire continue de la face périphérique intérieure de la virole et, en particulier, on peut choisir la dureté et les dimensions de ladite surépaisseur annulaire continue et mettre en oeuvre l'étape b) de telle sorte que, dans ladite position relative déterminée, ladite surépaisseur annulaire continue provoque la formation de cette gorge annulaire continue correspondante dans la face périphérique intérieure de la virole, notamment par déformation plastique localisée de cette dernière. En particulier, on choisit dans ce cas de mettre en oeuvre l'étape b) en plaçant la virole dans un état d'excès d'extension circonférentielle pour faciliter son engagement coaxial sur l'extrémité annulaire du fût jusqu'à ce que soit atteinte leur position relative déterminée finale, dans laquelle on laisse la virole quitter cet état d'excès d'extension circonférentielle pour laisser s'établir la pression transversale assurant l'étanchéité relative, comme on l'a indiqué plus haut, et c'est au cours de cette réduction de son extension circonférentielle que la virole, en s'appliquant par sa face périphérique intérieure sur la surépaisseur de la pellicule formant garniture d'étanchéité, subit au contact de cette surépaisseur une déformation plastique localisée donnant naissance à une gorge annulaire continue en correspondance avec cette surépaisseur.

De préférence, pour faciliter l'arrêt de l'engagement coaxial de la virole sur l'extrémité annulaire du fût, lors de l'étape b), dans la position relative déterminée, la bague présente intérieurement des moyens de butée longitudinale vis-à-vis de ladite face frontale, à la transition entre la virole et la jupe, ces moyens formant une saillie transversale par rapport à ladite face périphérique intérieure. Dans ce cas, lors de l'étape b), on arrête l'engagement coaxial de la virole sur l'extrémité annulaire du fût lorsque les moyens de butée longitudinale butent contre ladite face frontale, en regard de laquelle ces moyens de butée restent disposés une fois le tuyau terminé. Les mêmes moyens de butée peuvent servir de butée longitudinale à l'about mâle lorsqu'ils forment également une saillie transversale par rapport à une face périphérique intérieure longitudinale de la jupe.

Les moyens de butée peuvent présenter diverses formes, et en particulier consister en des saillies localisées, régulièrement réparties angulairement autour de l'axe, mais on préfère un mode de réalisation selon lequel ces moyens de butée comportent une couronne transversale continue circonférentiellement, présentant une dimension longitudinale uniforme. En effet, une telle couronne de rigidifie localement la bague à l'encontre d'une augmentation de ses dimensions radiales et circonférentielles, ce qui contribue au maintien de l'état de tension élastique circonférentielle de la virole et de pression transversale entre la face périphérique intérieure de la virole et la face périphérique extérieure de l'extrémité annulaire du fût une fois le tuyau réalisé, c'est-à-dire au maintien de l'effet d'étanchéification mutuelle et, le cas échéant, de solidarisation mutuelle, tout en assurant une maîtrise au moins approximative, c'est-à-dire au moins dans des limites de tolérance acceptables, des dimensions transversales de la jupe.

Les moyens de butée peuvent servir à retenir la pellicule formant garniture d'étanchéité si, entre les étapes a) et b), on forme un retour annulaire transversal de cette pellicule sur ladite face frontale de l'extrémité annulaire du fût, auquel cas, lors de l'étape b), on arrête l'engagement coaxial de la virole de la bague sur l'extrémité annulaire du fût lorsque les moyens de butée longitudinale butent contre ladite face frontale par l'intermédiaire dudit retour, qui conserve ce rôle d'intermédiaire d'appui une fois le tuyau terminé.

Naturellement, il est nécessaire que, lorsque l'on assemble plusieurs tuyaux ou analogues selon l'invention en emboîtant coaxialement un about mâle de l'un dans la jupe de la bague d'about femelle de l'autre, cette bague soit placée en relation d'étanchéité non seulement avec le tuyau ou analogue dont elle fait partie, mais également avec l'about mâle de l'autre tuyau ou analogue.

A cet effet, on peut prévoir de monter une garniture d'étanchéité sur l'about mâle avant son emboîtement dans l'about femelle, mais, de préférence, la bague est réalisée de telle sorte que sa jupe présente intérieurement une conformation propre à recevoir et retenir au moins une garniture annulaire transversale d'étanchéité vis-à-vis de l'about mâle et, lors de l'étape a), à la fabrication de la bague, ou postérieurement à l'étape b), par exemple sur le site d'installation des tuyaux ou analogues, on solidarise avec la jupe, à l'intérieur de celle-ci, au moins une garniture annulaire transversale d'étanchéité vis-à-vis de l'about mâle.

Lorsque l'on craint qu'une solidarisation mutuelle de la virole de la bague et de l'extrémité annulaire du fût par un effet de friction mutuelle résultant de la pression transversale de la face périphérique intérieure de la virole sur la face périphérique extérieure de l'extrémité annulaire et/ou par collage de la face périphérique intérieure de la virole sur la face périphérique extérieure de l'extrémité annulaire et/ou sur une pellicule d'étanchéité entre ces faces et/ou par verrouillage d'une gorge annulaire continue de la face périphérique intérieure de la virole sur une surépaisseur annulaire continue d'une telle pellicule soit insuffisante, on peut compléter ou remplacer ces différents modes de solidarisation mutuelle par d'autres moyens.

L'un de ces moyens consiste en un goupillage transversal, régulièrement réparti circonférentiellement, par lequel on solidarise la virole avec le fût après l'étape b), ou encore par un encliquetage mutuel.

A cet effet, on réalise la bague d'about femelle sous une forme telle que la virole présente un bord annulaire transversal, longitudinalement à l'opposé de la transition entre la virole et la jupe, et, en saillie transversale par rapport à la face périphérique intérieure de la virole à proximité immédiate de ce bord, au moins un relief d'accrochage, à savoir par exemple plusieurs exemplaires dudit relief, localisés circonférentiellement, régulièrement répartis circonférentiellement et occupant une même position longitudinale. Alors, lors de l'étape a), on préfabrique le fût de telle sorte qu'il présente dans ladite face périphérique extérieure, à une distance longitudinale de ladite face frontale correspondant à la distance longitudinale séparant ledit relief d'accrochage de la transition entre la virole et la jupe, au moins une dépression de réception dudit relief d'accrochage, au nombre d'au moins un, et l'on met en oeuvre l'étape b) en engageant coaxialement, progressivement, à force, la virole sur l'extrémité annulaire du fût et en appuyant ledit relief d'accrochage, au nombre d'au moins un, sur ladite face périphérique extérieure moyennant une déformation élastique croissante de la bague et en le laissant s'engager dans ladite dépression, au nombre d'au moins une, par retour élastique lorsque ladite position relative déterminée est atteinte, pour retenir longitudinalement la virole sur le fût dans cette position relative déterminée, lorsque le tuyau est terminé. De préférence, lors de l'étape a), on réalise ladite dépression sous la forme d'une gorge annulaire transversale de la face périphérique extérieure du fût, ce qui permet de rendre indifférente l'orientation relative de la bague et du fût, autour de leur axe commun, lors de leur engagement coaxial lorsque l'on met en oeuvre l'étape b), mais on pourrait également prévoir pour le ou chaque exemplaire du relief d'accrochage un exemplaire respectif, localisé, de ladite dépression.

Compte tenu de ce que la réalisation d'un tuyau selon l'invention, notamment dans le procédé selon l'invention, met en oeuvre une bague d'about femelle de conception particulière, la présente invention s'étend également à une telle bague d'about femelle.

Cette bague peut en outre présenter des caractéristiques préférées indiquées précédemment à propos du tuyau ou analogue ou du procédé de fabrication de celui-ci.

En outre, de préférence, la virole et la jupe présentent une forme et des dimensions transversales respectives propres à permettre un emboîtement coaxial mutuel amovible de plusieurs bagues par emboîtement coaxial mutuel de la virole de l'une avec la jupe d'une autre. On peut ainsi stocker sous un encombrement minimal les bagues d'about femelle en attente de montage sur des fûts en béton, aux fins de réaliser des tuyaux analogues selon l'invention.

D'autres caractéristiques particulières et avantages des différents aspects de l'invention ressortiront de la description ci-dessous, relative à quelques exemples non limitatifs de mise en oeuvre, ainsi que des dessins annexés qui font partie intégrante de cette description.
La figure 1 montre une vue axiale d'une bague d'about femelle selon l'invention, par sa virole, dans un sens repéré par une flèche I à la figure 2.
La figure 2 montre une vue de la bague en coupe par un plan incluant son axe, tel que le plan repéré en II-II à la figure 1.
La figure 3 montre un détail de la jupe, repéré en III à la figure 2 et fortement agrandi par rapport à cette figure 2.
La figure 4 illustre l'emboîtement coaxial mutuel de plusieurs bagues d'about femelle selon l'invention en attente de montage sur un fût en béton en vue de la réalisation d'un tuyau ou analogue selon l'invention, les bagues étant vues en coupe par un plan incluant leur axe alors commun.

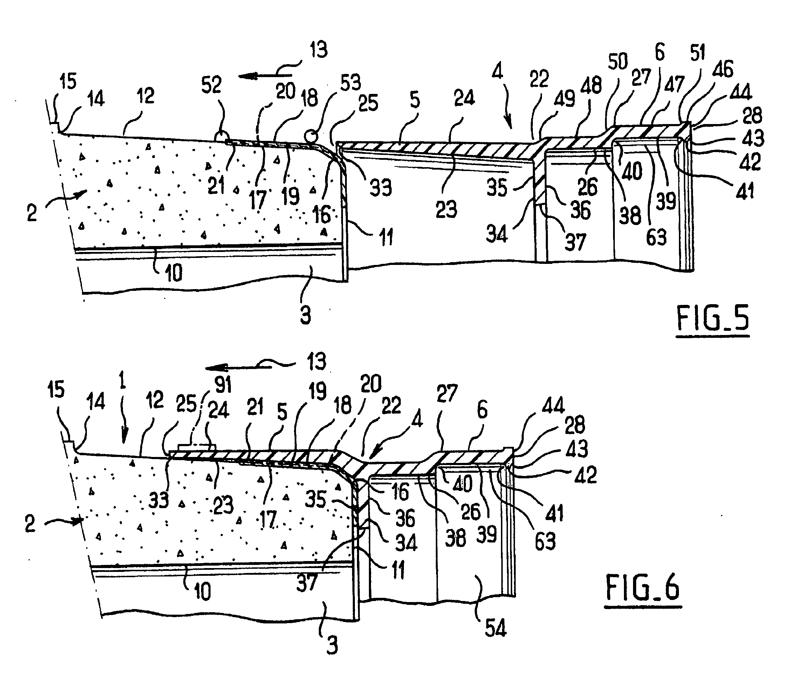

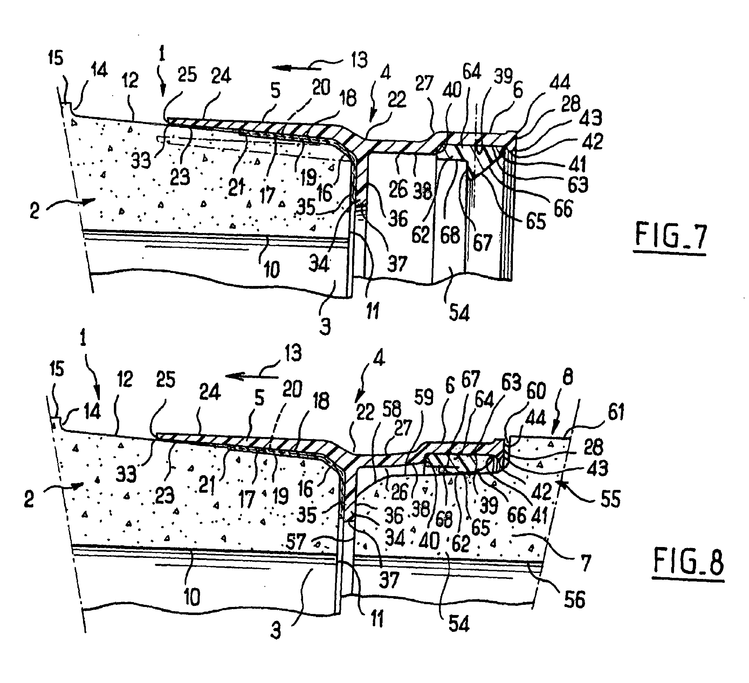

Les figures 5 à 8 illustrent respectivement un état de la bague d'about femelle et de l'extrémité annulaire du tube immédiatement préalable à leur assemblage mutuel, leur état assemblé, leur état après que l'on ait posé à l'intérieur de la jupe de la bague d'about femelle un joint d'étanchéité vis-à-vis d'un about mâle et leur état après que l'on ait inséré un tel about mâle dans l'about femelle constitué par la jupe de la bague d'about femelle, en coupe par un même plan incluant l'axe alors commun de la bague d'about femelle, de l'extrémité annulaire du fût et, en ce qui concerne la figure 8, de l'about mâle.
Les figures 9 et 10 illustrent deux variantes d'assemblage de la virole de la bague d'about femelle avec l'extrémité annulaire du fût, en des vues correspondant à celle de la figure 5 si ce n'est que l'on y a ajouté une figuration partielle, en traits mixtes, de la virole dans un état correspondant à celui de la figure 6.
La figure 11 illustre une autre variante d'assemblage de la virole avec l'extrémité annulaire du fût, en une vue analogue à celle de la figure 7 si ce n'est que l'on a illustré schématiquement l'about mâle dans une position correspondant à celle de la figure 8.
Les figures 12 à 17 illustrent, en des vues en perspective, différentes étapes du montage de la bague d'about femelle, à l'aide de moyens de maintien provisoire de sa virole en excès d'extension circonférentielle, sur l'extrémité annulaire du fût, l'assemblage ainsi réalisé entre la bague d'about femelle et le fût et l'assemblage ensuite réalisé avec un about mâle.
Les figures 18 et 19 illustrent, en des vues correspondant respectivement à celles des figures 5 et 8, une variante de réalisation de la virole de la bague d'about femelle et une variante de réalisation de l'étanchéité entre la bague d'about femelle et l'extrémité annulaire du fût.

Ces figures illustrent la mise en oeuvre de l'invention en relation avec la réalisation d'un about femelle d'un tuyau en vue de l'assemblage étanche avec un about mâle d'un autre tuyau, mais un homme du métier comprendra aisément que la présente invention pourra trouver son application chaque fois qu'il y aura lieu d'emboîter mutuellement, avec étanchéité, deux conduits ou autres éléments de construction analogues à des tuyaux, notamment ceux qui ont été énumérés en préambule à titre d'exemple non limitatif.

De plus, bien que la présente invention soit décrite par la suite dans le cas de tuyaux et de bagues d'about femelle présentant une symétrie respective de révolution autour d'un axe commun, l'invention pourra trouver également son application dans le cas de tuyaux ou analogues présentant des formes différentes d'une forme de révolution, en référence à leur axe, et il entrera dans le domaine des aptitudes normales d'un homme du métier d'apporter aux dispositions qui vont être décrites toute modification nécessaire dans chaque cas.

Dans la mesure où les différents modes de mise en oeuvre de l'invention illustrés aux figures présentent de grandes analogies, on a désigné par les mêmes références numériques les éléments qui se correspondent d'un mode de réalisation à l'autre, à savoir par 1 le tuyau selon l'invention, par 2 son fût de forme tubulaire, ici rectiligne, par 3 une extrémité annulaire de celui-ci, par 4 une bague d'about femelle selon l'invention, comportant de façon solidaire une virole 5 de solidarisation étanche avec l'extrémité annulaire 3 du fût 2 et une jupe 6 formant un about femelle pour le tuyau 1, par 7 un about mâle d'un autre tuyau 8, lequel about mâle 7 est emboîté de façon étanche dans la jupe 6 formant l'about femelle du tuyau 1, et par 9 un axe longitudinal autour duquel le fût 2, notamment à son extrémité annulaire 3, la bague 4, notamment en ce qui concerne sa virole 5 et sa jupe 6, et le tuyau 8, notamment en ce qui concerne son about mâle 7, présentent une forme respective de révolution. Cet axe 9 servira de référence aux notions de direction axiale ou longitudinale, de direction radiale ou transversale et de direction circonférentielle, ou aux notions dérivées, pour la suite de la description; de même, on considérera comme périphérique intérieure toute face tournée vers l'axe 9, comme périphérique extérieure toute face tournée dans le sens d'un éloignement par rapport à celui-ci et comme frontale toute face transversale, qu'il s'agisse de faces du fût 2 du tuyau 1, de la bague d'about femelle 4 de celui-ci ou du tuyau 8.

Conformément à l'un des aspects de la présente invention, la bague 4 et le fût 2 sont préfabriqués séparément, par moulage de béton en ce qui concerne le fût 2 et par moulage en une seule pièce d'une matière synthétique, par exemple un polypropylène, ou métallique, par exemple un acier inoxydable, ou encore par assemblage solidaire de plusieurs pièces métalliques en ce qui concerne la bague d'about femelle 4, ces exemples de matériaux et de modes de fabrication n'étant nullement limitatifs.

Tel qu'il est fabriqué et subsiste sans modification après assemblage avec la virole 5, le fût 2 est délimité sur l'ensemble de sa dimension longitudinale, notamment à son extrémité annulaire 3, par une face périphérique intérieure 10 cylindrique de révolution. A l'extrémité annulaire 3, cette face périphérique intérieure 10 se raccorde à une face frontale 11 annulaire de révolution, plane et perpendiculaire à l'axe 9, laquelle relie la face périphérique intérieure 10, dans le sens d'un éloignement par rapport à cet axe 9, à une face périphérique extérieure 12 quant à elle tronconique de révolution et s'évasant dans le sens longitudinal 13 d'un éloignement par rapport à la face frontale 11, en formant par rapport à l'axe 9 un angle non référencé de l'ordre de quelques degrés, par exemple de 3,5 degrés, ce chiffre ne constituant toutefois qu'un exemple non limitatif. Dans le sens 13, la face 12 se raccorde par un épaulement annulaire, transversal, plan 14, tourné en sens opposé au sens 13, à une face périphérique extérieure courante 15 du fût 2, laquelle est cylindrique de révolution et s'étend par exemple dans le sens 13 jusqu'à un about mâle du tuyau 1, lequel about mâle n'est pas représenté mais peut être identique à l'about mâle 7 du tuyau 8.

De préférence, comme il est illustré, la face 12 se raccorde à la face 11 par un chanfrein 16 annulaire de révolution. En outre, elle présente de préférence à proximité immédiate de son raccordement avec la face frontale 11, c'est-à-dire du chanfrein 16, et sur une partie de sa dimension longitudinale à partir de ce raccordement, c'est-à-dire du chanfrein 16, à savoir par exemple sur environ la moitié de sa dimension longitudinale entre la face frontale 11 et l'épaulement 14, un décrochement annulaire 17, de préférence réalisé lors de la préfabrication du fût 2 et destiné à recevoir une garniture 18 d'étanchéité entre l'extrémité annulaire 3 du fût 2 et la virole 5 de la bague 4. Dans l'exemple illustré aux figures 5 à 7, cette garniture d'étanchéité 18 est réalisée sous forme d'une pellicule d'un matériau élastiquement compressible d'étanchéité, par exemple un caoutchouc synthétique d'une dureté de l'ordre de 60 DIDC, cette matière et cette dureté n'étant indiquées qu'à titre d'exemple non limitatif, avec une épaisseur de l'ordre de 1,7 mm en l'absence de compression, ce chiffre étant également indiqué à titre d'exemple non limitatif, et le décrochement 18 est défini par un fond 19 de même conicité que la face 12, en retrait de l'ordre de la moitié de l'épaisseur précitée de la garniture ou pellicule 18 par rapport à un prolongement géométrique 20 de la face 12, depuis le chanfrein 16 jusqu'à un épaulement annulaire, transversal 21 de raccordement avec le reste de la face 12, lequel épaulement 21 est plan, perpendiculaire à l'axe 9 et tourné en sens opposé au sens 13. A l'opposé de cet épaulement 21, c'est-à-dire en sens opposé au sens 13, le fond 19 du décrochement 17 se raccorde directement au chanfrein 16 ; corrélativement, de préférence, la pellicule constituant la garniture 18 est dimensionnée de telle sorte qu'une fois mise en place, dans un état d'extension élastique circonférentielle, sur le fond 19 du décrochement 17, elle s'étende en sens opposé au sens 13 depuis l'épaulement 21 jusqu'au chanfrein 16 et contourne ce dernier jusqu'à former un retour annulaire transversal sur la face frontale 11, sur au moins une partie de la dimension radiale de cette dernière à partir du chanfrein 16 et au maximum jusqu'au raccordement de cette face frontale 11 avec la face 10, en épousant étroitement le fond 19 du décrochement 17, le chanfrein 16 et la partie correspondante de la face frontale 11 et en formant une saillie sur environ la moitié de son épaisseur par rapport au prolongement géométrique 20 de la face 12 entre l'épaulement 21 et le chanfrein 16, en l'absence de compression élastique de cette garniture ou pellicule 18.

La garniture ou pellicule d'étanchéité 18 est ainsi mise en place sur l'extrémité annulaire 3 du fût 2 avant que l'on ne place la bague 4, par sa virole 5, sur cette extrémité annulaire 3.

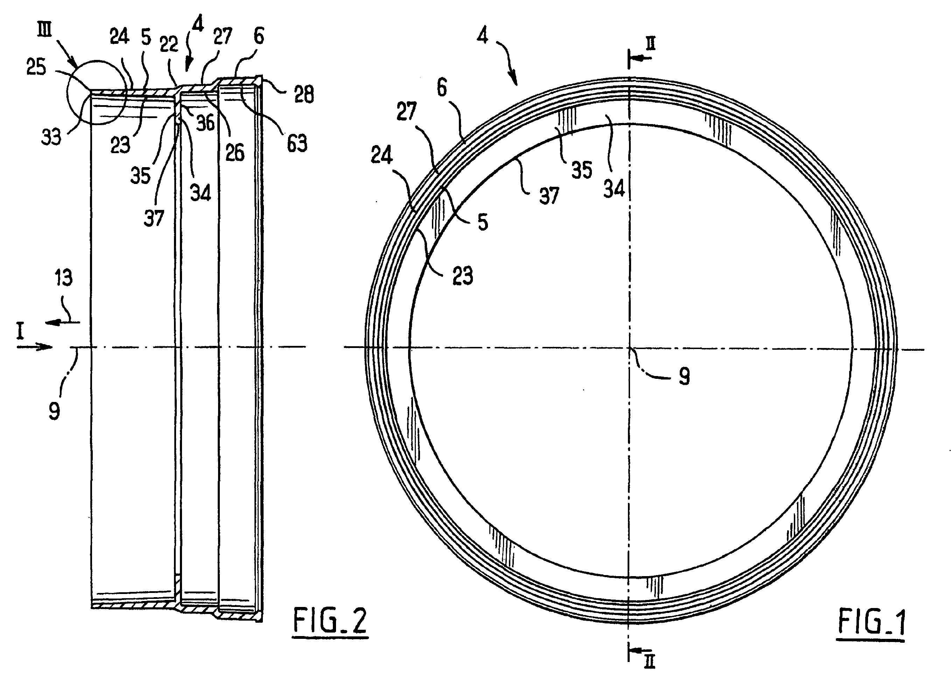

La bague d'about femelle 4 est quant à elle préfabriquée sous une forme qui ressort des figures 1 à 5 et va être décrite à présent. Cette forme est celle sous laquelle la bague 4 se présente à l'état de repos, c'est-à-dire lorsqu'elle n'est soumise à aucune contrainte d'extension radiale et circonférentielle, étant entendu que son montage solidaire sur l'extrémité annulaire 3 du fût 2 se traduit par son passage à un état d'extension élastique circonférentielle et radiale de sa virole 5 alors que la jupe 6 conserve au moins approximativement sa conformation et ses dimensions de repos. Toutefois, la virole 5 et la jupe 6 sont orientées longitudinalement et situées au moins approximativement dans le prolongement longitudinal l'une de l'autre dans ces deux états, et en porte-à-faux respectivement dans le sens 13 et en sens opposé au sens 13 par rapport à une transition 22 entre elles, laquelle est annulaire de révolution.

A partir de la transition 22, la virole 5 est délimitée par des faces périphériques respectivement intérieure 23 et extérieure 24 qui se raccordent mutuellement, dans le sens 13, c'est-à-dire longitudinalement à l'opposé de la transition 22, le long d'un bord libre 25, annulaire de révolution. De même, à partir de la transition 22, la jupe 6 est délimitée par des faces périphériques intérieure 26 et extérieure 27 qui s'étendent, en sens opposé au sens 13, à partir de la transition 22, jusqu'à un bord libre 28, annulaire de révolution, ainsi longitudinalement opposé à la transition 22.

Si l'on considère la virole 5 à l'état de repos, telle qu'elle est illustrée à la figure 5, sa face périphérique extérieure 24 est sensiblement cylindrique de révolution, étant entendu qu'elle peut présenter une légère conicité de révolution, avec une convergence dans le sens 13 pour faciliter le démoulage si la bague 4 est réalisée par moulage en une seule pièce. Egalement à l'état de repos de la virole 5, la face périphérique intérieure 23 présente une forme tronconique de révolution qui diverge dans le sens 13 en formant par rapport à l'axe 9 un angle non référencé, inférieur à celui que forme par rapport à cet axe 9 la face périphérique extérieure 12 de l'extrémité annulaire 3 du fût 2 et par exemple de l'ordre de 2,5 degrés lorsque ce dernier angle est de l'ordre de 3,5 degrés, ces chiffres n'étant indiqués qu'à titre d'exemples non limitatifs. En outre, la virole 5 est dimensionnée de telle sorte qu'à l'état de repos, à une distance longitudinale déterminée de la transition 22, sa face périphérique intérieure 23 présente des dimensions transversales inférieures à celles que la face périphérique extérieure 12 de l'extrémité annulaire 3 du fût présente à la même distance longitudinale de la face frontale 11, mais suffisamment proches de celles-ci pour pouvoir être augmentées jusqu'à celles-ci, et de préférence au-delà de celles-ci, par mise en tension élastique circonférentielle de la virole 5 ; lorsque la face 12 présente un décrochement 17, les dimensions à prendre en compte dans cette relation entre les dimensions de la face périphérique intérieure 23 et les dimensions de la face périphérique extérieure 12 sont celles du prolongement géométrique 20 de la face 12 en regard du décrochement 17 ; en outre, en présence d'un retour de la garniture ou pellicule d'étanchéité 18 sur la face frontale 11 de l'extrémité annulaire 3 du fût 2, la distance longitudinale à prendre en compte en ce qui concerne la face 12 doit inclure l'épaisseur du retour en question, c'est-à-dire doit être comptée non pas à partir de la face frontale 11 elle-même mais à partir de la limite extrême de la garniture ou pellicule 18 en sens opposé au sens 13 ; il est bien entendu que l'on peut toutefois généralement négliger à cet égard l'épaisseur du retour de la garniture ou pellicule 18, en raison de la relative faiblesse de cette épaisseur et de la conicité des faces 12 et 23, et mesurer les distances longitudinales en question à partir de la face frontale 11, dans le sens 13.

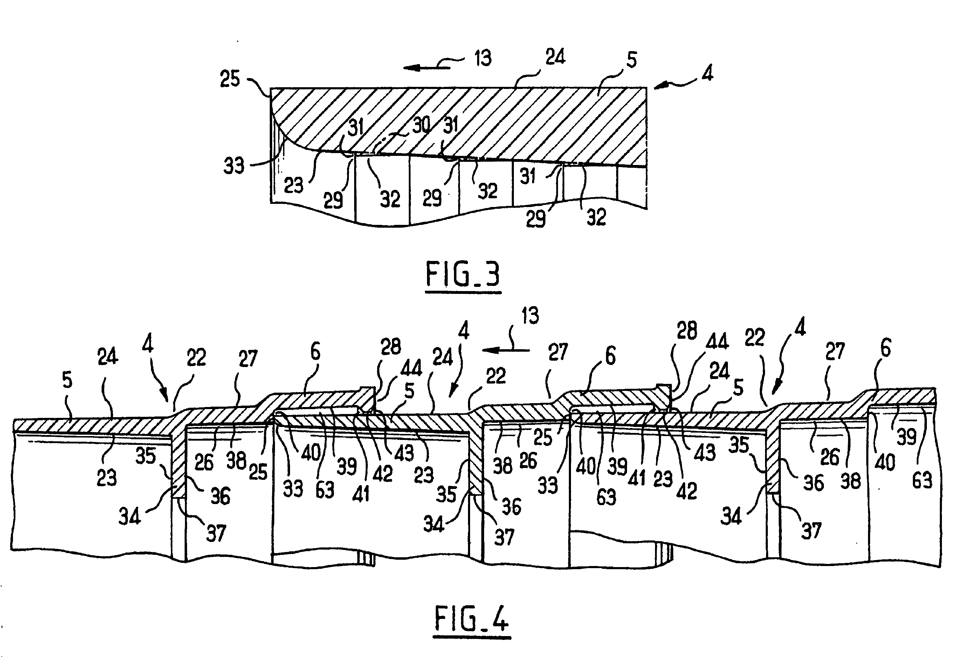

La face périphérique intérieure 23 pourrait être lisse mais, pour améliorer un effet d'ancrage ultérieur de la virole 5 sur la face 12 et, le cas échéant, sur la garniture ou pellicule d'étanchéité 18, on lui donne une conformation illustrée à la figure 3, selon laquelle cette face 23 présente au moins un, et de préférence plusieurs reliefs annulaires continus 29 élastiquement et/ou plastiquement compressibles transversalement, constitués d'une seule pièce avec la virole 5 et présentant par exemple la forme de godrons.

Chacun de ces godrons, définis comme indiqué en préambule et formant ainsi une saillie localisée, vers l'axe 9, par rapport à un prolongement géométrique 30 de la face 23 à leur niveau, est par exemple délimité par un épaulement annulaire, transversal 31, tourné dans le sens 13 et raccordé au reste de la face 23 dans le sens d'un éloignement par rapport à l'axe 9, et par un flanc 32 annulaire, cylindrique de révolution ou, pour des raisons de démoulage lorsque la bague 4 est réalisée par moulage, tronconique de révolution en formant par rapport à l'axe 9 un angle inférieur à celui du reste de la face 23, ce flanc 32 raccordant l'épaulement 31, dans sa zone la plus proche de l'axe 9, au reste de la face 23 en sens opposé au sens 13. Lorsque de tels godrons ou autres reliefs annulaires continus 29 sont ainsi prévus, les dimensions à prendre en compte pour la face périphérique intérieure 23 aux fins de la comparaison ci-dessus avec les dimensions de la face périphérique extérieure 12 de l'extrémité annulaire 3 du fût 2 ou de prolongement géométrique 20 de cette face 12 sont celles de la face 23, hors des godrons ou autres reliefs 29, et du prolongement géométrique 30 de cette face 23 à l'emplacement des godrons ou autres reliefs 29.

A partir de la transition 22, la face périphérique intérieure 23 et la face périphérique extérieure 24 s'étendent sur une dimension longitudinale au plus égale et de préférence inférieure à celle de la face 12 mesurée entre la face frontale 11, ou le cas échéant la limite du retour de la garniture ou pellicule d'étanchéité 18 en sens opposé au sens 13, et l'épaulement 14, mais supérieure à la distance longitudinale séparant l'épaulement 21 de la face 11 ou de la limite précitée du retour de la garniture ou pellicule d'étanchéité 18. Au niveau du bord libre 25, les faces périphériques intérieure 23 et extérieure 24 sont raccordées mutuellement par un chanfrein 33 annulaire de révolution, présentant des dimensions longitudinales négligeables par rapport à celles des faces 23, 24 et 12.

A la transition 22 entre la virole 5 et la jupe 6, les faces périphériques extérieures 24 et 27 correspondantes se raccordent directement, alors que les faces périphériques intérieures 23 et 26 correspondantes se raccordent de préférence, comme il est illustré, par l'intermédiaire d'une couronne transversale 34, annulaire de révolution, continue circonférentiellement, présentant une dimension longitudinale ou épaisseur uniforme et formant une saillie vers l'axe 9, par rapport aux deux faces périphériques intérieures 23 et 26.

Plus précisément, la couronne 34 est délimitée respectivement dans le sens 13 et dans le sens opposé par des faces frontales planes 35, 36, annulaires de révolution, perpendiculaires à l'axe 9 et se raccordant respectivement à la face périphérique intérieure 23 et à la face périphérique intérieure 26 dans le sens d'un éloignement par rapport à cet axe 9. Vers celui-ci, les faces 35 et 36 sont raccordées mutuellement par un chant périphérique intérieur 37 qui pourrait être cylindrique de révolution autour de l'axe 9 mais, pour des raisons de démoulage si la bague est fabriquée par moulage, est tronconique de révolution autour de cet axe, par exemple avec une convergence dans le sens 13 ; toutefois, le diamètre minimal de ce chant 37 est supérieur au diamètre de la face périphérique intérieure 10 du fût 2, et de préférence approximativement identique au diamètre minimal du retour que la garniture ou pellicule ou joint 18 forme sur la face frontale 11 de l'extrémité 3 du fût 2 lorsqu'un tel retour est prévu.

Comme il apparaîtra plus loin, la couronne 34 sert, par sa face 35, de butée à la bague 4 dans le sens 13 contre la face frontale 11 du fût 2, le cas échéant par l'intermédiaire du retour de la garniture ou pellicule 18 sur cette face frontale 11, et sert de butée, par sa face 36, à l'about mâle 7 de l'autre tuyau 8 dans le sens 13 par rapport à la bague 4. Elle pourrait être remplacée à ce double effet par des reliefs intérieurs circonférentiellement localisés et circonférentiellement répartis de la bague 4, mais la réalisation des moyens de butée sous forme d'une couronne annulaire continue constitue un moyen avantageux pour rigidifier la jupe 6, c'est-à-dire pour s'opposer à sa déformation lorsque la virole 5 est mise en extension radiale et circonférentielle, comme il apparaîtra par la suite, en vue de son montage sur l'extrémité annulaire 3 du fût 2.

A cet égard, on remarquera qu'alors que la virole 5 s'affine progressivement dans le sens 13, à partir de la transition avec la jupe 6, celle-ci présente radialement une épaisseur sensiblement constante, sensiblement identique ou, localement, supérieure à l'épaisseur maximale de la virole 5, c'est-à-dire à l'épaisseur que cette dernière présente à proximité immédiate de la transition 22.

A partir de la transition 22, c'est-à-dire de la face 36 de la couronne 34, en sens opposé au sens 13, la face périphérique intérieure 26 de la jupe 6 présente plusieurs tronçons 38, 39, 42 approximativement cylindriques de révolution, si l'on excepte une légère conicité avec une convergence dans le sens 13 en vue du démoulage lorsque la bague 4 est réalisée par moulage.

Un premier 38 de ces tronçons, qui se raccorde dans le sens 13 à la face 36, présente à l'opposé de ce raccordement un diamètre maximal qui est inférieur au diamètre que la face périphérique extérieure 24 de la virole 5 présente au niveau du bord libre 25, mais supérieur au diamètre minimal de la face périphérique intérieure 23, c'est-à-dire au diamètre que celle-ci présente à son raccordement avec la face 35 de la couronne 34. Longitudinalement à l'opposé de son raccordement avec la face 36, le tronçon 38 se raccorde à un deuxième 39 des tronçons précités par l'intermédiaire d'un épaulement 40 annulaire, plan, perpendiculaire à l'axe 9 et tourné en sens opposé au sens 13. A son raccordement avec cet épaulement 40, le tronçon 39 présente un diamètre minimal supérieur au diamètre que la face périphérique extérieure 24 de la virole 5 présente à son raccordement avec le bord libre 25 et, longitudinalement à l'opposé de son raccordement avec l'épaulement 40, le tronçon 39 se raccorde par un chanfrein 41 annulaire de révolution à un troisième 42 de ces tronçons, lequel présente à son raccordement avec le chanfrein 41 un diamètre minimal légèrement supérieur au diamètre que la face périphérique extérieure 24 de la virole 5 présente à une distance longitudinale du bord libre 25 égale à la distance longitudinale séparant mutuellement l'épaulement 40 et le chanfrein 41. Longitudinalement à l'opposé de son raccordement avec le chanfrein 41, le tronçon 42 se raccorde par un chanfrein 43 également annulaire de révolution à une face frontale 44 de la jupe 6, laquelle face frontale est annulaire de révolution, plane, perpendiculaire à l'axe 9 et tournée en sens opposé au sens 13 et définit le bord libre 28.

Compte tenu des dimensionnements précités des tronçons 38, 39 et 42 de la face périphérique intérieure 26 de la jupe 6, comparés aux dimensions de la face périphérique extérieure 24 de la virole 5, les bagues 4 préfabriquées, en attente de montage sur un fût respectif, peuvent être stockées à l'état mutuellement emboîté coaxialement, comme on l'a illustré à la figure 4. Dans cet état d'emboîtement mutuel, la virole 5 d'une bague 4 est emboîtée dans le sens 13 à l'intérieur de la jupe 6 d'une autre bague 4, identique, qui lui succède dans le sens 13, dans des conditions telles que le bord libre 25 de la première de ces bagues 4 s'appuie dans le sens 13 sur l'épaulement 40 de la deuxième de ces bagues 4 et que le tronçon 42 de la face périphérique intérieure 26 de celle-ci, en formant une butée transversale pour la face périphérique extérieure 24 de la virole 5 ainsi emboîtée, empêche un désaxement mutuel des bagues 4. Le stockage peut s'effectuer alors que les axes 9 alors confondus sont horizontaux, ou verticaux, par exemple en une pile de bagues 4 mutuellement emboîtées, dont la bague 4 inférieure repose sur le sol ou sur une palette par la face 44 de son bord libre 28.

On observera qu'en raison de la simplicité des formes de la face périphérique intérieure 26 de la jupe 6, la dépouille que le chanfrein 41 forme entre les tronçons 39 et 42 ne s'oppose pas à une fabrication par moulage, selon des procédés bien connus d'un mouleur, étant entendu qu'elle peut également résulter d'une reprise d'usinage en fin de fabrication de la bague 4.

Dans le sens d'un éloignement radial par rapport à l'axe 9, la face frontale 44 raccorde le chanfrein 43 à la face périphérique extérieure 27 de la jupe 6, laquelle face périphérique extérieure 27 présente comme la face périphérique intérieure 26 trois tronçons approximativement cylindriques de révolution autour de l'axe 9 mais, en cas d'une fabrication par moulage, légèrement tronconiques de révolution avec une convergence dans le sens 13, à savoir trois tronçons 46, 47, 48 qui se succèdent dans le sens 13 à partir de la face 44 et correspondent pour l'essentiel, suivant une direction radiale, respectivement au tronçon 42, au tronçon 39 et au tronçon 38.

Le tronçon 48 présente, au niveau de la transition 22, un diamètre minimal supérieur au diamètre maximal que la face périphérique extérieure 24 de la virole 5 présente au niveau de cette transition 22, et il est raccordé à la face périphérique extérieure 24 de la virole 5 par un chanfrein 49 tronconique de révolution avec une convergence dans le sens 13. La pente du tronçon 48 et celle du tronçon 38, par rapport à l'axe 9, sont sensiblement identiques de telle sorte que la jupe 6 présente entre les tronçons 38 et 48 une épaisseur approximativement constante, et il en est de même pour les tronçons 47 et 39. Le tronçon 47 présente son diamètre minimal à sa jonction avec le tronçon 48 dans le sens 13, et ces deux tronçons 47 et 48 sont raccordés mutuellement par un chanfrein 50 tronconique de révolution, qui correspond à l'épaulement 40 par rapport auquel il est disposé de façon à maintenir cette épaisseur sensiblement constante de la jupe 6.

Par contre, le tronçon 46 forme avec le tronçon 42, à proximité immédiate du bord libre 28 de la jupe 6, une surépaisseur augmentant l'inertie de cette dernière à l'encontre d'une extension élastique radiale et circonférentielle et, à cet effet, le tronçon 46 présente à son raccordement avec le tronçon 47 un diamètre minimal qui est supérieur au diamètre maximal que le tronçon 47 présente à son raccordement avec le tronçon 46, et ces deux tronçons 47 et 46 sont raccordés mutuellement par un épaulement annulaire de révolution 51 plan, perpendiculaire à l'axe 9 et tourné dans le sens 13.

Une fois que le fût 2 et la bague 4 présentant les caractéristiques précitées ont été fabriqués, et le cas échéant après que l'on ait installé sur le fût 2 la garniture ou pellicule d'étanchéité 18, de la façon qui vient d'être décrite, on termine la fabrication du tuyau 1 en engageant coaxialement la virole 5 de la bague 4 sur l'extrémité annulaire 3 du fût 2, dans le sens 13, jusqu'à une position relative déterminée illustrée à la figure 6, dans laquelle la transition 22 entre la virole 5 et la jupe 6 coïncide longitudinalement avec la face frontale 11, et plus précisément jusqu'à ce que la face 35 de la couronne 34 bute dans le sens 13 contre cette face 11, le cas échéant par l'intermédiaire du retour de la garniture ou pellicule 18 sur cette face 11.

Compte tenu des caractéristiques dimensionnelles comparées de la face périphérique intérieure 23 de la virole 5 et de la face périphérique extérieure 12 de l'extrémité annulaire 3 du fût 2, y compris l'éventuelle garniture ou pellicule d'étanchéité 18, on peut effectuer cet engagement coaxial par emmanchement de la virole 5 à force, par sa face périphérique intérieure 23, sur la face périphérique extérieure 12 de l'extrémité annulaire 3 du fût 2, éventuellement munie de la garniture ou pellicule d'étanchéité 18, ce qui place progressivement la virole 5 dans un état de tension élastique circonférentielle qui atteint son maximum lorsqu'elle atteint par rapport au fût 2 la position déterminée dans laquelle la face 35 de la couronne 34 s'appuie dans le sens 13 contre la face frontale 11, le cas échéant par l'intermédiaire du retour de la garniture ou pellicule d'étanchéité 18. Lorsque cette position relative déterminée est atteinte, la tension élastique circonférentielle de la virole 5 est telle que celle-ci applique par sa face périphérique intérieure 23 une pression transversale répartie circonférentiellement de façon continue sur la face 12 seule, en l'absence de décrochement 17 et de garniture ou pellicule d'étanchéité 18, ou, si une telle garniture ou pellicule d'étanchéité 18 est présente, d'une part sur cette garniture ou pellicule d'étanchéité 18 en la comprimant transversalement, et d'autre part sur la face 12 au-delà de l'épaulement 21 dans le sens 13, en créant du fait de cette pression transversale une étanchéité mutuelle, accrue par la présence éventuelle des godrons ou autres reliefs 29, créant un surcroît de la pression transversale en question selon un anneau transversal continu respectif.

Cette pression radiale que la face périphérique intérieure 23 de la virole 5 applique à la face périphérique extérieure 12 de l'extrémité annulaire 3 du fût 2, que cette face 23 épouse intimement, et le cas échéant à la garniture ou pellicule d'étanchéité 18 que la face 23 épouse également intimement et qui épouse elle-même intimement le fond 19 du décrochement 17, peut être suffisante pour assurer par friction mutuelle tout ou partie de la solidarisation mutuelle de la virole 5, c'est-à-dire de la bague 4, et du fût 2, en fonction du coefficient de frottement relatif des différents matériaux mis ainsi en contact mutuel, de la pente des faces 12 et 23 par rapport à l'axe 9 et des surfaces de contact mutuel.

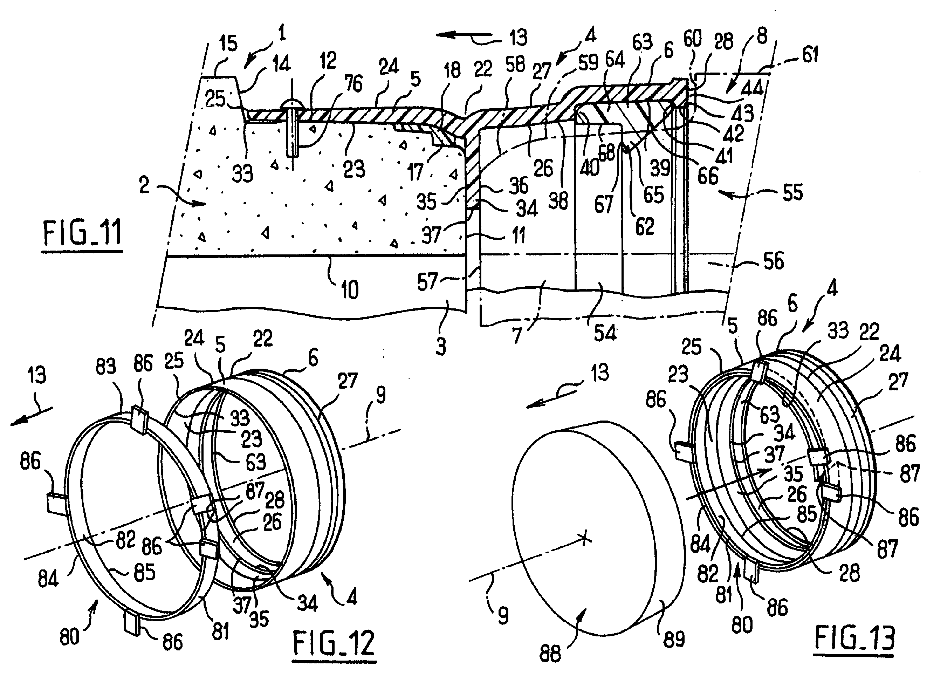

De telles conditions peuvent être remplies notamment si la mise en place de la bague 4, par sa virole 5, sur l'extrémité 3 du fût ne nécessite pas l'interposition d'un lubrifiant entre la face périphérique intérieure 23, d'une part, la face périphérique extérieure 12 et l'éventuelle garniture ou pellicule d'étanchéité 18, d'autre part, à savoir notamment :
- soit, lorsque l'on pratique le montage par emmanchement à force en l'absence de décrochement 17 et de garniture ou pellicule d'étanchéité 18,
- soit, en présence ou en absence du décrochement 17 et de la garniture ou pellicule d'étanchéité 18, lorsque l'on monte la bague 4 par un procédé qui sera décrit ultérieurement, en référence aux figures 12 à 17.

Lorsque de telles conditions sont remplies, on peut renforcer l'effet de solidarisation mutuelle par friction entre la face périphérique intérieure 23 de la virole 5 et la face périphérique extérieure 12 de l'extrémité annulaire 3 du fût 2 par frettage de la virole 5, après que la position relative déterminée illustrée à la figure 6 ait été atteinte, au moyen d'au moins une frette 91 dont on entoure coaxialement la face périphérique extérieure 24 de la virole 5, de préférence à proximité immédiate de son bord libre 25, comme on l'a illustré en trait mixte à la figure 6, et que l'on place en tension circonférentielle, par des moyens connus d'un Homme du métier, afin d'augmenter, par l'intermédiaire de la virole 5, la pression d'application de la face périphérique intérieure 23 sur la face périphérique extérieure 12. On observera que ce frettage a également pour effet d'augmenter l'étanchéité entre ces faces 12 et 23.

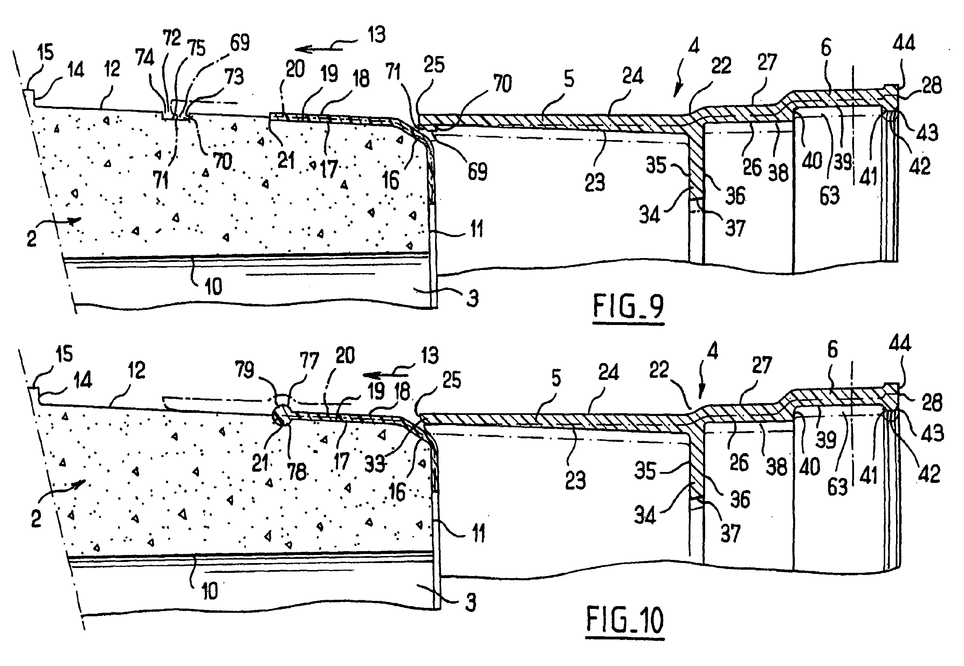

Si, par contre, on pratique le montage par emmanchement à force, dans des conditions imposant la présence d'un lubrifiant entre la face périphérique intérieure 23 de la virole 5, d'une part, la face périphérique extérieure 12 de l'extrémité annulaire 3 du fût 2 et l'éventuelle garniture ou pellicule- d'étanchéité 18, d'autre part, la solidarisation ainsi obtenue par friction peut être insuffisante en raison notamment de la persistance de la présence du lubrifiant, et elle doit dans ce cas être complétée par des moyens appropriés, dont un exemple va être décrit en référence aux figures 5 et 6 et dont d'autres exemples seront décrits, dans le cadre de variantes de mise en oeuvre de l'invention, en référence aux figures 9 et 11.

Les moyens illustrés aux figures 5 et 6 consistent en la création, préalablement à l'emmanchement de la virole 5 à force sur l'extrémité annulaire 3 du fût 2 puis au fur et à mesure de cet emmanchement, d'une pellicule de colle qui, à l'état frais, constitue un lubrifiant facilitant le glissement longitudinal de la face 23 sur l'éventuelle garniture ou pellicule d'étanchéité 18 et sur la face périphérique extérieure 12 de l'extrémité annulaire 3 du fût 2 puis, par la suite, après que la position limite dans laquelle la face 35 de la couronne 34 s'appuie dans le sens 13 contre la face frontale 11, le cas échéant par l'intermédiaire du retour de la garniture ou pellicule d'étanchéité 18, ait été atteinte, fait prise entre la face périphérique intérieure 23 de la virole 5, d'une part, la face périphérique extérieure 12 de l'extrémité annulaire 3 du fût 2 et, le cas échéant, la garniture ou pellicule d'étanchéité 18, d'autre part, pour assurer une solidarisation de la virole 5 et de la bague 4 avec le fût 2 et l'éventuelle garniture ou pellicule 18 par collage dans leur zone de contact mutuel.

Un tel collage mutuel, si l'on prend soin de l'effectuer selon un anneau circonférentiellement continu, améliore en outre l'étanchéification mutuelle.

De façon particulièrement avantageuse, comme on l'a illustré à la figure 5, la colle est appliquée, préalablement à l'emmanchement de la virole 5 sur l'extrémité annulaire 3 du fût 2, sous forme d'un anneau continu 52 sur une zone de la face périphérique extérieure 12 choisie de telle sorte qu'au cours de l'emmanchement à force, elle constitue une zone de contact avec la face périphérique intérieure 23 de la virole 5, par exemple à proximité immédiate de l'épaulement 21 lorsqu'un décrochement 17 et une garniture ou pellicule d'étanchéité 18 sont prévus, ou encore à proximité immédiate du chanfrein 16 en l'absence d'un tel décrochement 17 et d'une telle garniture ou pellicule d'étanchéité 18. Lorsqu'une telle garniture ou pellicule d'étanchéité 18 est prévue, un autre anneau continu de colle 53 peut être disposé sur celle-ci à proximité immédiate de la transition entre le décrochement 17 et le chanfrein 16. Ainsi, au fur et à mesure que l'emmanchement à force progresse, la face 23 entraîne successivement la colle de l'anneau 53 et la colle de l'anneau 52 pour les étaler sur la garniture ou pellicule d'étanchéité 18 et sur la face 12, respectivement, dans leur zone de contact mutuel en conservant sa continuité circonférentielle à chaque anneau de colle ainsi étalée.

En variante, de façon non illustrée, la colle pourrait également être déposée en plusieurs anneaux, notamment continus, sur l'éventuelle garniture ou pellicule d'étanchéité 18 et/ou sur la face périphérique extérieure 12 de l'extrémité annulaire 3 du fût 2, ou encore en un ou plusieurs anneaux continus sur la face périphérique intérieure 23 de la virole 5, dans des zones convenablement choisies pour constituer des zones de contact mutuel lors du processus d'emmanchement à force et à la fin de ce processus, et de préférence dès le début de celui-ci.

De façon également non illustrée, mais aisément déductible de la façon, qui vient d'être décrite, d'améliorer l'étanchéité entre les faces 12 et 23 au moyen d'au moins un anneau continu 52 de colle, on pourrait améliorer cette étanchéité, ou créer cette étanchéité, par exemple en l'absence de la pellicule d'étanchéité 18, en remplaçant la colle, pour la réalisation de cet anneau, par un matériau plastique d'étanchéité, communément appelé « mastic », dont on provoquerait l'écrasement et/ou le fluage entre les faces 12 et 23 au fur et à mesure du processus précité d'emmanchement, pour former à la fin de celui-ci au moins un anneau continu d'étanchéité entre ces faces 12 et 23. De même que la colle précitée, ce matériau plastique d'étanchéité pourrait également être disposé en au moins un anneau continu sur la face périphérique intérieure 23 de la virole, en au moins une zone choisie pour constituer une zone de contact avec la face périphérique extérieure 12 du fût 2 pendant le processus d'emmanchement à force et à la fin de celui-ci. L'étanchéité assurée par le matériau plastique d'étanchéité pourrait remplacer l'étanchéité assurée par la garniture 18, ou la compléter dans une zone dans laquelle cette garniture 18 n'est pas interposée entre les faces 12 et 23.

A la fin de l'emmanchement, c'est-à-dire lorsque la couronne 34 bute par sa face 35, dans le sens 13, contre la face frontale 11 de l'extrémité annulaire 3 du fût 2, le cas échéant par le retour de la garniture ou pellicule 18, comme le montre la figure 6, la jupe 6 forme une saillie longitudinale sur la face frontale 11, en sens opposé au sens 13, qui constitue ainsi un about femelle 54 pour le tuyau 1, dans le prolongement de l'extrémité annulaire 3 du fût 2 avec lequel la jupe 6 est solidarisée par l'intermédiaire de la virole 5.

Cet about femelle 54 est destiné à recevoir, par emboîtement longitudinal dans le sens 13, l'about mâle 7 du tuyau 8, comme le montre la figure 8.

A cet effet, l'about mâle 7 présente, en relation avec la conformation de la jupe 6, la conformation connue d'un about mâle en relation avec la conformation de l'about femelle dans lequel il doit s'emboîter. De même, il peut présenter toute conception connue.

Dans l'exemple illustré, cet about mâle 7 est réalisé par moulage en une seule pièce de béton avec un fût 55 du tuyau 8, en tout point analogue au fût 2 du tuyau 1, qui peut d'ailleurs présenter un about mâle identique à cet about mâle 7, longitudinalement à l'opposé de son extrémité annulaire 3 munie de la bague 4, de même que le fût 55 du tuyau 8 peut être muni d'une bague analogue à la bague 4 longitudinalement à l'opposé de l'about mâle 7.

Dans l'exemple illustré, et si l'on considère l'about mâle 7 comme occupant une position finale d'emboîtement à l'intérieur de l'about femelle 54 constitué par la jupe 6, comme le montre la figure 8, cet about mâle 7 est délimité vers l'axe 9 par une face périphérique intérieure 56 commune à l'ensemble du fût 55 et cylindrique de révolution avec un diamètre identique à celui de la face 10, que cette face 56 prolonge longitudinalement, en sens opposé au sens 13. Dans ce sens 13, la face 56 se raccorde à une face frontale 57 du fût 55, laquelle est annulaire de révolution, plane, perpendiculaire à l'axe 9 et tournée dans le sens 13. Radialement à l'opposé de son raccordement avec la face 56, cette face 57 présente un diamètre maximal qui est intermédiaire entre le diamètre minimal de la face 36 de la couronne 34 de la bague 4, c'est-à-dire le diamètre minimal du chant 37 de cette couronne 34, et le diamètre minimal du tronçon 28 de la face périphérique intérieure 26 de la jupe 6 de la bague 4, si bien que le fût 55 du tuyau 8 s'appuie à plat dans le sens 13, par sa face 57, contre la face 36 de la couronne 34 et, par l'intermédiaire de celle-ci et de l'éventuel retour de la garniture ou pellicule d'étanchéité 18, sur la face frontale 11 de l'extrémité annulaire 3 du fût 2 du tuyau 1.

Par son plus grand diamètre, ainsi défini, la face frontale 57 se raccorde, par l'intermédiaire d'un chanfrein 58 tronconique de révolution, convergent dans le sens 13, à une face périphérique extérieure 59 de l'about mâle 7, laquelle est également tronconique de révolution, convergente dans le sens 13, et forme par rapport à l'axe 9 un angle du même ordre de grandeur que l'angle que forme par rapport à celui-ci la face périphérique extérieure 12 de l'extrémité annulaire 3 du fût 2. A une distance longitudinale de la face frontale 57 supérieure à la distance longitudinale entre la face frontale 44 de la jupe 6 de la bague 4 et la face 36 de la couronne 34 de celle-ci, la face périphérique extérieure 59 se raccorde par un chanfrein non référencé à un épaulement annulaire de révolution 60, plan, perpendiculaire à l'axe 9 et tourné dans le sens 13, lequel assure le raccordement de la face périphérique extérieure 59 à une face périphérique extérieure courante 61 du fût 55, laquelle est avantageusement cylindrique de révolution avec un diamètre identique à celui de la face périphérique extérieure courante 15 du fût 2 du tuyau 1, les deux tuyaux 1 et 8 pouvant être mutuellement identiques.

Divers moyens peuvent être prévus pour assurer une étanchéité entre l'about mâle 7 et l'about femelle 54 constitué par la jupe 6 et, en particulier, de façon connue en elle-même, on peut prévoir à cet effet le montage d'une garniture annulaire d'étanchéité sur la face périphérique extérieure 59 de l'about mâle 7. Dans ce cas, le tronçon 38 de la face périphérique intérieure 26 de la jupe 6 de la bague 4 peut s'étendre sans discontinuité, longitudinalement, de la face 36 de la couronne 34 jusqu'à la face frontale 44 de la jupe 6, de même que le tronçon 48 de la face périphérique extérieure 27 de cette jupe 6 peut s'étendre sans discontinuité du chanfrein 49 jusqu'à cette face frontale 44, les décrochements constitués par l'épaulement 40 et le chanfrein 41 dans la face 26 étant omis de même que la saillie formée sur la face 27 par les chanfreins 50 et 51 et par les tronçons 46 et 47 de face périphérique extérieure.

Un tel mode de réalisation n'a pas été illustré, et relève des aptitudes normales d'un homme du métier en ce qui concerne la modification précitée de la conformation de la jupe 6 de la bague 4.

On peut également prévoir, pour assurer cette étanchéité, de solidariser avec la jupe 6, à l'intérieur de celle-ci, préalablement à l'emboîtement longitudinal de l'about mâle 7, au moins une garniture annulaire transversale d'étanchéité vis-à-vis de l'about mâle 7.

Ce montage de la garniture transversale d'étanchéité peut être effectué dès la préfabrication de la bague 4 ou encore, comme on l'a illustré à la figure 7, entre le montage solidaire de cette bague 4, par sa virole 5, sur l'extrémité annulaire 3 du fût 2, illustré à la figure 6, et l'emboîtement de l'about mâle 7 du tuyau 8, illustré à la figure 8.

Dans l'exemple illustré, on a prévu une seule garniture annulaire d'étanchéité 62 à l'intérieur de la jupe 6, et cette garniture annulaire d'étanchéité 62 est fixée et retenue sur le tronçon 39 de la face périphérique intérieure 26, par exemple par collage, entre l'épaulement 40 et le chanfrein 41 qui contribuent à l'immobiliser à l'encontre d'un coulissement longitudinal par rapport à la jupe 6, par effet d'emboîtement de la garniture annulaire d'étanchéité 62 dans une gorge 63 annulaire, de révolution, que l'épaulement 40, le chanfrein 41 et le tronçon 39 de la face périphérique intérieure 26 définissent en creux dans celle-ci.

Plus précisément, la garniture d'étanchéité 62, réalisée en un matériau élastiquement compressible d'étanchéité tel qu'un caoutchouc synthétique, présente un talon 64 longitudinal, annulaire de révolution, présentant une conformation complémentaire de celle de la gorge 63 de façon à s'emboîter à l'intérieur de celle-ci, et à permettre sa fixation à la jupe 6 de la bague 4 par exemple par collage sur le tronçon 39 de la face périphérique intérieure 26, et un relief annulaire transversal d'étanchéité 65 en saillie radiale vers l'axe 9 par rapport au talon 64 et à un prolongement géométrique du tronçon 38 de la face périphérique intérieure 36 de la jupe 6 de la bague 4. Lorsque la garniture d'étanchéité 62 est au repos, c'est-à-dire n'est soumise à aucune contrainte comme c'est le cas avant l'emboîtement longitudinal de l'about mâle 7 du tuyau 8 dans l'about femelle 54 défini par la jupe 6, cette saillie présente une dimension radiale telle que, lors de cet emboîtement, le relief 65 vienne au contact, sous pression, de la face périphérique extérieure 59 de cet about mate 7 qui rabat ce relief 65 dans le sens 13, qui est le sens d'emboîtement, et comprime le relief 65 sur le talon 64 lui-même éventuellement comprimé dans le sens d'un éloignement par rapport à l'axe 9, sur le tronçon 39 de la face périphérique intérieure 26 de la jupe 6 de la bague 4, pour assurer une étanchéité entre cette jupe 4 et l'about mâle 7.

La conformation et le dimensionnement, à cet effet, du relief 65 peuvent être aisément déterminés par un homme du métier. A titre d'exemple non limitatif, le relief 65 est délimité dans l'exemple illustré, lorsqu'il est à l'état de repos, comme le montre la figure 7, par un flanc amont 66 tronconique de révolution, avec une convergence tournée dans le sens 13 et en formant un angle de l'ordre de 45° par rapport à l'axe 9, et par un flanc aval 67 annulaire de révolution, plan, perpendiculaire à l'axe 9, ces notions d'amont et d'aval s'entendant par référence au sens 13. Le relief 65 est localisé approximativement dans la moitié amont de la garniture 62, dont la partie aval restante est définie par le talon 64, qui présente à ce niveau une face périphérique intérieure 68 cylindrique de révolution. Une fois l'about mâle 7 du tuyau 8 emboîté à fond dans l'about femelle 54 défini par la jupe 6 de la bague 4, c'est-à-dire lorsque la face frontale 57 prend appui à plat, dans le sens 13, sur la face 36 de la couronne 34, comme le montre la figure 8, le relief 65 est rabattu vers l'aval sur le talon 64, dans des conditions telles que sa face 67 épouse la face 68, et l'ensemble constitué par le relief 65 et le talon 64 est comprimé dans le sens d'un éloignement par rapport à l'axe 9, sur le tronçon 39 de la face périphérique intérieure 26 de la jupe 6 de la bague 4, pour assurer une étanchéité à ce niveau. Naturellement, à cet effet, le talon 64 et le relief 65 de la garniture d'étanchéité 62 sont l'un et l'autre continus circonférentiellement.

On a décrit, en référence aux figures 5 à 8, un mode de solidarisation de la virole 5 de la bague 4 avec l'extrémité annulaire 3 du fût 2 soit par friction, soit par collage.

La figure 9 illustre un mode de solidarisation mutuelle par encliquetage, qui peut s'ajouter ou se substituer à ces deux modes de solidarisation.

On retrouve à cette figure 9, à l'identique et sous les mêmes références numériques, les différentes parties du fût 2 et de la bague 4 qui ont été décrites en référence aux figures 5 à 8, cette variante ne se distinguant du mode de réalisation décrit en référence aux figures 5 à 8 que par des caractéristiques additionnelles qui vont être décrites à présent.

L'une de ces caractéristiques consiste en ce que la virole de la bague 4, telle qu'elle est préfabriquée, présente à son bord libre 25, en saillie par rapport à sa face périphérique intérieure 23 à proximité immédiate de ce bord libre 25, au moins un exemplaire d'un relief 69 d'accrochage sur la face périphérique extérieure 12 de l'extrémité annulaire 3 du fût 2, et de préférence plusieurs exemplaires d'un tel relief d'accrochage, localisés circonférentiellement, régulièrement répartis circonférentiellement et occupant une même position longitudinale. Le nombre de reliefs d'accrochage 69 pourra être aisément déterminé par un homme du métier aux fins d'assurer la résistance mécanique requise à l'encontre d'un dégagement longitudinal de la virole 5 par rapport à l'extrémité annulaire 3 du fût 2.

Dans l'exemple illustré, chacun de ces reliefs d'accrochage 69 présente vers l'amont, en référence au sens 13, un flanc 70 plan, perpendiculaire à l'axe 9, et vers l'aval un flanc 71 convexe, présentant lorsqu'il est vu en coupe par un plan incluant l'axe 9 une section courbe, par exemple en arc de cercle, de façon similaire au chanfrein 33, de façon à raccorder le flanc 70 à la face périphérique extérieure 24 de la virole 5.

Le fût 2 est quant à lui préfabriqué de telle sorte qu'il présente dans sa face périphérique extérieure 12 une gorge annulaire transversale, continue 72 dans laquelle les reliefs 69 viennent s'accrocher, comme on l'a indiqué en traits mixtes à la figure 9, lorsque la bague 4 parvient, lors de son emmanchement longitudinal sur le fût 2, dans la position limité déterminée dans laquelle elle bute par la face 35 de la couronne 34 contre la face frontale 11 de l'extrémité annulaire 3 du fût 2, le cas échéant par l'intermédiaire du retour de la garniture ou pellicule d'étanchéité 18.

A cet effet, la gorge 72 est délimitée vers l'amont, en référence au sens 13, par un flanc 73 annulaire, transversal, plan, perpendiculaire à l'axe 9 et tourné dans le sens 13, et ce flanc 73 est situé à une distance longitudinale de la face frontale 11, ou le cas échéant de la limite amont du retour de la garniture ou pellicule d'étanchéité 18 sur cette face frontale 11, sensiblement égale à la distance longitudinale qui sépare mutuellement chaque flanc 70, tourné vers l'amont, d'un relief 69 et la face 35 de la couronne 34. En outre, la gorge 72 est délimitée par un flanc aval 74 également annulaire, plan, perpendiculaire à l'axe 9 mais quant à lui tourné en sens opposé au sens 13, ce flanc 74 étant espacé longitudinalement du flanc 73 d'une distance au moins égale à celle qui sépare chaque flanc 70 du bord libre 25 de la virole 5 de la bague 4, et par un fond 75 tronconique de révolution, avec une conicité identique à celle de la face périphérique extérieure 12, par rapport à laquelle ce fond 75 est placé en retrait d'une profondeur au moins égale à la dimension transversale de chaque flanc 70.

Ainsi, si l'on réalise le montage de la bague 4 sur le fût 2 par engagement coaxial, progressif, à force, de la virole 5 dans le sens 13 sur l'extrémité annulaire 3 du fût 2, le cas échéant avec utilisation d'un lubrifiant comme on l'a précédemment indiqué, les reliefs 69 viennent s'appuyer par le flanc 71 sur la face périphérique extérieure 12, le cas échéant sur la garniture ou pellicule d'étanchéité 18, et la progression de la bague 4 dans le sens 13 par rapport au fût 2 provoque de ce fait une déformation élastique croissante de la virole, radialement vers l'extérieur et en direction circonférentielle, jusqu'à ce que la face 35 de la couronne 34 vienne buter sur la face frontale 11, le cas échéant par l'intermédiaire du retour de la garniture ou pellicule 18. Alors, le flanc 70 de chaque relief 69 coïncide avec le flanc 73 de la gorge 72 et, par tendance naturelle de la virole 5 à reprendre sa conformation d'origine par élasticité, les reliefs 69 viennent s'engager dans la gorge 72, jusqu'à une position dans laquelle leurs flancs 70 s'appuient en sens opposé au sens 13 sur le flanc 73 de cette gorge, en assurant ainsi une solidarisation de la virole 5, c'est-à-dire de la bague 4, avec le fût 2 à l'encontre d'une dissociation mutuelle longitudinale.

Un homme du métier comprendra aisément que la gorge 72 pourrait être remplacée par autant de dépressions de la face périphérique extérieure 12 que de reliefs 69, sans que l'on sorte pour autant du cadre de la présente invention.

Selon une autre variante, illustrée à la figure 11, on peut également assurer la solidarisation mutuelle de la virole 5, c'est-à-dire de la bague 4, et de l'extrémité annulaire 3 du fût 2 par un goupillage transversal, régulièrement réparti circonférentiellement, à savoir par exemple au moyen de rivets radiaux 76 qui traversent de part en part la virole 5 dans une zone située au-delà du décrochement 17 de réception de la garniture d'étanchéité 18, dans le sens 13, et qui s'ancrent dans un trou borgne respectif percé dans la face périphérique extérieure 12 de l'extrémité annulaire 3 du fût 2. Ces rivets pourraient être remplacés par des vis, ou par tout autre moyen mécanique de solidarisation directe de la virole 5 avec extrémité annulaire 3 du fût 2, sans que l'on sorte pour autant du cadre de la présente invention. Leur nombre peut être aisément déterminé par un homme du métier aux fins d'assurer la solidarisation mutuelle requise.

La figure 11 illustre également une forme du décrochement 17 différente de la forme décrite en référence aux figures 5 à 8, et une forme associée différente de la garniture d'étanchéité 18, maintenue en contrainte de compression radiale d'étanchéité vers la face périphérique intérieure 23 de la virole 5, et sans retour sur la face frontale 11 de l'extrémité annulaire 3 du fût 2. Il est toutefois bien entendu que, quel que soit le mode de solidarisation de la virole 5 avec cette extrémité annulaire 3, l'étanchéité entre elles peut être assurée par l'un quelconque des moyens décrits en référence aux figures 3, 5 à 9 et 11, toute combinaison compatible entre les diverses dispositions décrites et illustrées dans la présente demande devant être considérée comme entrant dans le cadre de celle-ci qui est défini seulement par les revendications ici jointes.

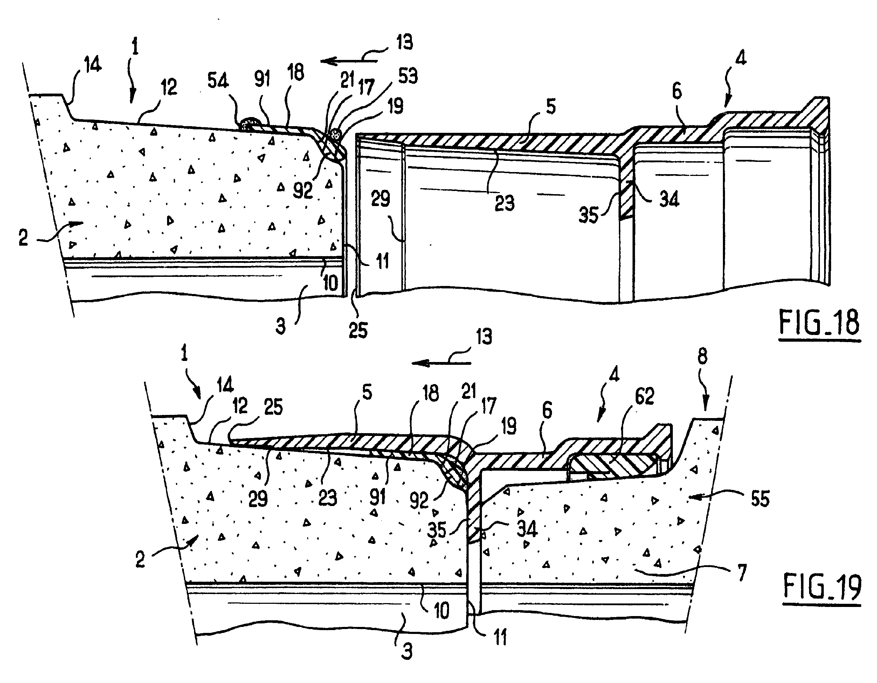

Ainsi, on a illustré aux figures 18 et 19 une variante de mise en oeuvre de la présente invention réunissant une synthèse de certaines dispositions précédemment décrites.

Ainsi, la variante illustrée aux figures 18 et 19 se rapproche de la variante illustrée à la figure 11 en ce qu'elle met en oeuvre une garniture d'étanchéité 18 qui ne forme pas de retour sur la face frontale 11 de l'extrémité annulaire 3 du fût 2.

Dans le cas de cette variante, le décrochement 17 est étroitement localisé à la jonction entre la face frontale 11 et la face périphérique extérieure 12 de l'extrémité annulaire 3 du fût 2, en ce sens que son fond 19 présente une dimension longitudinale beaucoup plus faible, ramenée à la dimension longitudinale à la face périphérique extérieure 12, que dans le cas des variantes décrites en référence aux figures 5 à 10. Par contre, l'épaulement 21 qui limite le décrochement 17 dans le sens 13 présente une dimension radiale supérieure à celle qu'il présente dans le cas des variantes précitées, ramenée à la dimension radiale non référencée séparant mutuellement la face périphérique extérieure 12, par exemple à sa jonction avec l'épaulement 21, et à la face périphérique intérieure 10 du fût 2. Dans l'exemple illustré, le fond 19 et l'épaulement 21 définissant le décrochement 17 sont l'un et l'autre tronconiques de révolution autour de l'axe 9, non visible aux figures 18 et 19, et s'évasent dans le sens 13, de façon plus prononcée pour l'épaulement 21 que pour le fond 19, et la transition entre l'épaulement 21 et la face périphérique extérieure 12 de l'extrémité annulaire 3 du fût 2 présente un diamètre du même ordre de grandeur que celui du bord libre 25 de la virole 5 de la bague 4 lorsque cette virole 5 se trouve dans un état de repos illustré à la figure 18.

En relation avec cette forme du décrochement 17, la garniture d'étanchéité 18 présente une forme dite « en goutte » qui, lorsqu'elle est vue en coupe par un plan axial comme c'est le cas aux figures 18 et 19, comporte une zone plate 91 et une zone renflée 92, constituant respectivement une zone aval et une zone amont en référence au sens 13.

La garniture d'étanchéité 18 est conformée et dimensionnée de telle sorte qu'elle soit montée sur l'extrémité 3 du fût 2 dans un état d'extension élastique circonférentielle et dans une position dans laquelle :
- la zone plate 91 épouse une partie marginale de la face périphérique extérieure 12 jouxtant immédiatement l'épaulement 21, à partir duquel cette zone 91 s'étend dans le sens 13 sur une dimension longitudinale largement inférieure à la dimension longitudinale séparant mutuellement les épaulements 14 et 21, et par exemple de l'ordre du tiers de cette dimension longitudinale, et
- la zone 92, fléchie vers l'axe 9 par rapport à la zone 91, épouse l'épaulement 21 et au moins une partie du fond 19 directement adjacente à cet épaulement 21, en contribuant à la retenue de la garniture 18 à l'encontre d'un déplacement dans le sens 13 sur l'extrémité annulaire 3 du fût 2 lors de la mise en place de la bague d'about femelle 4 sur cette extrémité 3, dans des conditions qui seront décrites par la suite, et forme une saillie axiale, en sens opposé au sens 13, par rapport à un prolongement géométrique coplanaire, non illustré, de la face frontale 11 de l'extrémité 3 du fût 2 lorsque, comme il est illustré à la figure 18, la bague d'about femelle 4 n'est pas encore mise en place sur l'extrémité annulaire 3 du fût 2.

La bague d'about femelle 4 présente quant à elle, dans l'état de repos illustré à la figure 18, la conformation décrite en référence aux figures 1 à 5 si ce n'est qu'au lieu d'être lisse ou, comme on l'a illustrée à la figure 3, munie d'une pluralité de reliefs annulaires continus, par exemple en forme de godrons, élastiquement et/ou plastiquement compressibles transversalement, répartis longitudinalement, la face périphérique intérieure 23 de la virole 5 présente un seul de ces reliefs annulaires continus 29, élastiquement et/ou plastiquement compressible transversalement, constitué d'une seule pièce avec la virole 5 et situé à une distance longitudinale de la face 35 de la couronne 34 supérieure à la distance séparant longitudinalement de la face frontale 11 la limite aval de la garniture 18 en référence au sens 13, bien qu'inférieure à la distance séparant mutuellement, longitudinalement, le bord libre 25 de la virole 5 et la face 35 de la couronne 34. Plus précisément, le relief 29 est sensiblement plus proche, longitudinalement, du bord libre 25 que de la face 35.

Dans l'exemple illustré, ce relief 29 est défini par un épaulement tourné dans le sens 13 et reliant mutuellement deux zones non référencées, sensiblement de même conicité, de la face périphérique intérieure 23 lorsque la virole 5 se trouve à l'état de repos comme c'est le cas à la figure 18.

La jupe 6 de la bague 4 présente quant à elle une conformation en tous points identique à celle qui a été précédemment décrite, et en particulier propre à recevoir intérieurement et à retenir une garniture 62 en tous points identique à celle qui a été décrite en référence aux figures 7 et 8 et propre à assurer une étanchéification vis-à-vis d'un about mâle 7 d'un fût 55 d'un tuyau 8 par exemple identique au tuyau 1, dans les conditions qui ont été décrites en référence aux figures 7 et 8 et comme le montre la figure 19.

La bague 4 ainsi conçue est montée et solidarisée sur la zone extrême 3 du fût 2 dans des conditions identiques à celles qui ont été décrites en référence aux figures 5 et 6, avant ou après mise en place de la garniture 62 dans la jupe 6.

En particulier, avant d'emboîter la bague d'about femelle dans le sens 13, à force, sur la zone d'extrémité 3 du fût 2 munie de la garniture d'étanchéité 18, on dépose respectivement sur celle-ci, approximativement en un emplacement annulaire de sa zone 92 d'un diamètre approximativement identique à celui du bord libre 25 de la virole 5, c'est-à-dire là où s'établit un contact initial entre la virole 5 et la garniture 18 lors de l'emboîtement coaxial à la force de la virole de la bague 4 sur l'extrémité 3, dans le sens 13, et à la limite aval de cette garniture 18 en référence au sens 13, à savoir plus précisément à la transition entre la zone 91 de cette garniture et la face périphérique extérieure 12 de la zone d'extrémité 3 du fût 2, un cordon respectif de colle 53, 54, annulaire de révolution autour de l'axe 9 et continu. Ainsi, au fur et à mesure de l'emboîtement à force de la virole 5 de la bague 4 sur l'extrémité 3, dans le sens 13, la face périphérique intérieure 23 de la virole 5 entraîne successivement la colle du cordon 53 puis celle du cordon 54 et étale cette colle sur la zone 91 de la garniture 18 et sur la partie de la face périphérique extérieure 12 de la zone extrême 3 que la face périphérique intérieure 23 de la virole 5 couvre progressivement.

La présence du relief annulaire 29 facilite cet entraînement de la colle du cordon 53 puis de celle du cordon 54 et la création, d'abord, d'une pellicule de colle encore fraîche, continue en direction circonférentielle comme en direction longitudinale, entre la face périphérique intérieure 23, d'une part, la garniture d'étanchéité 18 et la face périphérique extérieure 12, d'autre part, ce qui facilite le coulissement longitudinal relatif, puis la création au moyen de cette colle, au fur et à mesure de sa prise, d'une solidarisation également aussi continue que possible, en direction circonférentielle comme en direction longitudinale, entre la face périphérique intérieure 23, d'une part, la garniture d'étanchéité 18, par sa zone 91, et la face périphérique extérieure 12, d'autre part.

Ce mouvement d'emboîtement de la virole 5 de la bague d'about femelle 4 à force sur la zone extrême 3 du fût 2 se traduit par un écrasement progressif de la zone 91 de la garniture 18 en direction radiale, entre la face périphérique intérieure 23 de la virole 5 progressivement mise en extension élastique circonférentielle, et la face périphérique extérieure 12 de l'extrémité annulaire 3 du fût 2, ce qui procure une étanchéité efficace à ce niveau, puis par un écrasement élastique de la zone 92, en direction longitudinale, entre la face 35 et l'épaulement 21, ainsi que le fond 19 du décrochement 17, ce qui établit également une étanchéité à ce niveau lorsque la face 35 de la couronne 34 de la bague 4 vient butter dans le sens 13 contre la face frontale 11 de l'extrémité annulaire 3 du fût 2, ce qui définit la position relative définitive de la bague 4 par rapport au fût 2, illustrée à la figure 19.

Dans cette position, la face périphérique intérieure 23 de la virole 5 s'appuie élastiquement, dans un état d'extension circonférentielle élastique, contre la face périphérique extérieure de l'extrémité annulaire 3 du fût 2 dans deux zones, à savoir :
- indirectement par l'intermédiaire de la zone 91 de la garniture 18, dans la partie de la face 12 couverte par cette zone 91, et
- directement au niveau du relief annulaire 29,
et éventuellement dans une troisième zone, à savoir directement au niveau du bord libre 25.

On obtient ainsi une étanchéification particulièrement efficace entre la virole 5 et l'extrémité annulaire 3 du fût 2, cette étanchéification étant encore accrue par l'appui de la face 35 de la couronne 34 contre la zone 92 de la garniture 18.

La solidarisation de la bague 4, par sa virole 5, avec l'extrémité annulaire 3 du fût 2 est également assurée ainsi particulièrement efficacement, à la fois du fait de la présence de la colle et du fait de l'appui mutuel sous pression suivant une direction approximativement radiale en référence à l'axe 9.

Un homme du métier comprendra aisément que d'autres variantes de réalisation et de positionnement relatif de la bague d'about femelle 4, de la garniture d'étanchéité 18 et de l'extrémité annulaire du fût 2 sont encore possibles sans que l'on sorte pour autant du cadre de la présente invention, notamment par synthèse entre les différentes dispositions précédemment décrites et illustrées.

De même, bien que l'on ait décrit, en référence aux figures 5 à 9, 11, 18 et 19, un montage de la virole 5 sur l'extrémité annulaire 3 du fût 2 par emmanchement progressif, à force, généralement avec interposition d'un lubrifiant qui peut être avantageusement constitué par une colle contribuant ensuite à la solidarisation mutuelle et à l'étanchéité, on pourrait également appliquer provisoirement à la virole 5 de la bague 4, pendant son engagement coaxial sur l'extrémité annulaire 3, une extension élastique, radiale et circonférentielle, par des moyens autres que l'appui sur la face périphérique extérieure 12 de cette extrémité annulaire 3 et, le cas échéant, sur la garniture ou pellicule d'étanchéité 18, afin de faciliter cet emmanchement à force ou même de le remplacer par un simple emboîtement sans pression mutuelle et par conséquent sans friction entre la face périphérique intérieure 23 de la virole 5 de la bague 4 et la face périphérique extérieure 12 de l'extrémité annulaire 3 du fût 2, et le cas échéant la garniture ou pellicule d'étanchéité 18, puis autoriser un retour de la virole 5 à un état d'application d'une telle pression mutuelle lorsqu'est atteinte la position limite dans laquelle la face 35 de la couronne 34 s'appuie à plat, dans le sens 13, sur la face frontale 11 de l'extrémité annulaire 3 du fût 2, le cas échéant par l'intermédiaire du retour de la garniture ou pellicule d'étanchéité 18.

Un tel mode de mise en oeuvre présente l'avantage de permettre de se dispenser de lubrifiant entre la face périphérique intérieure 23 de la virole 5 de la bague 4 et la face périphérique extérieure 12 de l'extrémité annulaire 3 du fût 2, ainsi que le cas échéant la garniture ou pellicule d'étanchéité 18, et de favoriser par conséquent une solidarisation mutuelle par friction.

A cet effet, on peut avoir recours à un chauffage de la bague 4, provoquant une dilatation thermique provisoire de celle-ci, et faire cesser ce chauffage une fois que la bague a atteint sa position limite d'engagement longitudinal sur l'extrémité annulaire 3 du fût 2, ce qui peut être suffisant lorsque la face périphérique extérieure 12 de l'extrémité annulaire 3 du fût 2 et l'éventuelle garniture ou pellicule d'étanchéité 18 ainsi que la virole 5 de la bague 4 présentent la conformation décrite en référence aux figures 3, 5 à 8, voire 9, et, en ce qui concerne la garniture d'étanchéité 18, la conformation décrite en référence à la figure 11. On peut également avoir recours à cet effet à des moyens mécaniques, selon un procédé qui sera décrit en référence aux figures 12 à 17, aussi bien dans le cas des conformations décrites en référence aux figures 3, 5 à 9 et 11 qu'en ce qui concerne plus particulièrement une conformation qui va être décrite à présent en référence à la figure 10.

On y retrouve le fût 2, la bague 4 et la garniture ou pellicule d'étanchéité 18 à l'identique de ce qui a été décrit en référence aux figures 5 à 8, avec les mêmes références numériques pour leurs différents composants, à l'exception des différences qui vont être décrites à présent.

Au repos, c'est-à-dire avant sa mise en place sur le fût 2, la bague 4 est en tous points identique à celle qui a été décrite en référence aux figures 1 à 5. Par contre, si la garniture ou pellicule d'étanchéité 18 conserve une épaisseur uniforme au niveau de son retour sur la face frontale 11 de l'extrémité annulaire 3 du fût 2, sur le chanfrein 16 de celui-ci et sur l'essentiel de sa dimension longitudinale à partir de ce chanfrein 16, jusqu'à proximité de l'épaulement 21 du décrochement 17, elle présente à proximité immédiate de cet épaulement 21 une surépaisseur annulaire continue 77, en forme de jonc de section circulaire lorsque cette surépaisseur 77 est vue en coupe par un quelconque plan incluant l'axe 9, la garniture ou pellicule d'étanchéité 18 étant considérée avant la mise en place de la bague 4, par sa virole 5, sur l'extrémité annulaire 3 du fût 2. Pour recevoir une partie correspondante de cette surépaisseur 77, le fond 19 du décrochement 17 est creusé localement, à proximité immédiate de l'épaulement 21, d'une gorge 78 annulaire, continue, présentant une section en arc de cercle lorsqu'elle est vue en coupe dans l'un quelconque plan incluant l'axe 9, de façon à recevoir sans jeu cette partie de la surépaisseur 77, alors qu'une autre partie de celle-ci fait saillie dans le sens radial d'un éloignement par rapport à l'axe 9 par rapport à la face périphérique extérieure 12 de l'extrémité annulaire 3 du fût 2 et par rapport à la partie de la garniture ou pellicule d'étanchéité 18 qui repose sur le fond 19 du décrochement 17.

Un homme du métier comprendra aisément que, lorsque la virole 5 s'appuie sous pression, par sa face périphérique intérieure 23, sur la face périphérique extérieure 12 de l'extrémité annulaire 3 du fût 2 et sur la garniture ou pellicule d'étanchéité 18, respectivement de part et d'autre de la surépaisseur 77, cette surépaisseur 77 provoque un surcroît, longitudinalement localisé, de tension circonférentielle de la virole 5 et de pression de contact avec la face périphérique intérieure 23 de celle-ci.

De préférence, comme il est illustré à la figure 10, où l'on a schématisé en traits mixtes la position de la virole 5 lorsque la bague 4 s'appuie par la face 35 de la couronne 34 sur la face frontale 11 de l'extrémité annulaire 3 du fût 2, par l'intermédiaire du retour de la garniture ou pellicule d'étanchéité 18, on choisit la dureté et les dimensions de la surépaisseur 77 et on pratique la mise en place de la bague 4, par sa virole 5, sur l'extrémité annulaire 3 du fût 2 et sur la garniture ou pellicule d'étanchéité 18, de telle sorte que, dans cette position limite, la surépaisseur 77 provoque la formation, dans la face périphérique intérieure 23 de la virole 5, d'une gorge annulaire continue correspondante 79, étroitement complémentaire de la partie de la surépaisseur 77 en saillie par rapport à la face périphérique extérieure 12 de l'extrémité annulaire 3 du fût 2 et par rapport à la partie de la garniture ou pellicule d'étanchéité 18 correspondant au fond 19 du décrochement 17, notamment par déformation plastique localisée de la virole 5.

A cet effet, et pour permettre à la virole 5 de franchir sans difficulté et sans risque d'endommagement la surépaisseur 77 de la garniture ou pellicule d'étanchéité 18 lors de sa mise en place sur cette dernière et sur la face périphérique extérieure 12 de l'extrémité annulaire 3 du fût 2, on préfère effectuer cette mise en place par le procédé qui va être décrit à présent en référence aux figures 12 à 17, étant entendu que, dans certains cas, la mise en place par emmanchement à force décrite en référence aux figures 1 et 9 à 11 ou la mise en place sous dilatation thermique provisoire de la bague 4 notamment au niveau de sa virole 5 pourrait également être adoptée lorsque la garniture ou pellicule d'étanchéité 18 présente une surépaisseur 77 comme on l'a décrit en référence à la figure 10.

Les figures 12 à 17 illustrent l'utilisation, pour le montage de la bague 4, par sa virole 5, sur l'extrémité annulaire 3 du fût 2, d'un procédé consistant à placer provisoirement, c'est-à-dire le temps de sa translation longitudinale par rapport à l'extrémité annulaire 3 du fût 2 jusqu'à ce que la face 35 de la couronne 34 s'applique à plat contre la face frontale 11 de l'extrémité annulaire 3 du fût 2, le cas échéant par l'intermédiaire du retour de la garniture ou pellicule d'étanchéité 18, la virole 5 dans un état d'extension circonférentielle supérieure à l'extension circonférentielle que la virole 5 occupe lorsqu'elle repose sur la face périphérique extérieure 12 de l'extrémité annulaire 3 du fût 2 et sur la garniture ou pellicule d'étanchéité 18 sous une pression propre à assurer une étanchéification mutuelle, puis à laisser la virole 5 quitter cet état d'excès d'extension circonférentielle pour laisser s'établir cette pression transversale, par élasticité de la virole 5, lorsque la position relative précitée est atteinte.

A cet effet, au lieu d'avoir recours à des moyens thermiques, pour provoquer une dilatation provisoire de la bague 4 notamment au niveau de sa virole 5, on provoque une telle dilatation provisoire par des moyens mécaniques dans le cas du procédé illustré aux figures 12 à 17.

On retrouve à la figure 12 la bague 4 à l'état de repos, et on y a par ailleurs illustré, dans une relation de coaxialité avec la bague 4, longitudinalement face au bord libre 25 de la virole 5, un outil annulaire 80 d'extension circonférentielle et radiale de la virole 5.

Cet outil 80 est essentiellement constitué d'une cerce 81 semi-rigide, qui va être décrite dans cette relation de coaxialité par rapport à la bague 4.

Dans un état de repos illustré à la figure 12, la cerce 81 est délimitée respectivement vers l'axe 9 et dans le sens d'un éloignement par rapport à celui-ci par une face périphérique intérieure 82 et une face périphérique extérieure 83, l'une et l'autre cylindriques de révolution autour de l'axe 9, avec entre ces faces 82 et 83 une épaisseur aussi faible que possible mais néanmoins suffisante pour assurer à la cerce 81 une résistance mécanique appropriée à l'utilisation qui va être décrite. Respectivement dans le sens 13 et en sens opposé au sens 13, les faces 82 et 83 sont raccordées mutuellement par un chant frontal aval 84 et par un chant frontal amont 85, l'un et l'autre annulaires de révolution autour de l'axe 9, plans et perpendiculaires à celui-ci. Entre les deux chants 84 et 85, la cerce 81 présente une dimension longitudinale ou longueur au plus égale à celle de la face 23, entre la face 35 de la couronne 34 et le bord libre 25, et de préférence au plus égale, et approximativement égale, à la différence entre cette dimension longitudinale de la face 23 et la distance longitudinale entre la surépaisseur 77 de la garniture ou pellicule d'étanchéité 18 et la face frontale 11 de l'extrémité annulaire 3 du fût 2 ou la limite extrême du retour éventuel de la garniture ou pellicule d'étanchéité 18 sur cette face frontale 11. La face périphérique intérieure 82 présente quant à elle un diamètre supérieur au diamètre maximal de la surépaisseur 77 ainsi qu'au diamètre que la face 12 présente à une distance longitudinale, correspondant à la dimension longitudinale de la cerce 81 entre ses chants 84 et 85, du bord libre 25 de la virole 5 lorsque celle-ci prend appui à plat, par la face 35 de la couronne 34, sur la face frontale 11 de l'extrémité annulaire 3 du fût 2, le cas échéant par l'intermédiaire du retour de la garniture ou pellicule d'étanchéité 18 sur cette face frontale 11.

Sur son chant aval 84, la cerce 81 porte solidairement, en saillie radiale par rapport à sa face périphérique extérieure 83, c'est-à-dire dans le sens d'un éloignement par rapport à l'axe 9, toutefois sans saillie radiale par rapport à sa face périphérique intérieure 82, c'est-à-dire en direction de l'axe 9, une pluralité de pattes rigides 86 régulièrement réparties angulairement autour de l'axe 9, si ce n'est que deux d'entre elles sont voisines. A titre d'exemple non limitatif, on a illustré deux de ces pattes 86 dans des positions diamétralement opposées, une troisième de ces pattes 86 suivant un diamètre perpendiculaire à celui des deux pattes 86 précitées, et encore deux autres de ces pattes 86, mutuellement voisines et disposées symétriquement l'une de l'autre par rapport à une position diamétralement opposée à celle de la troisième patte 86 précitée.

Entre ces deux pattes 86 mutuellement voisines, la cerce 81 est sectionnée en biseau, c'est-à-dire suivant un plan non référencé oblique par rapport à l'axe 9, de façon à définir deux faces extrêmes planes 87 perpendiculaires aux faces périphériques intérieure 82 et extérieure 83 mais obliques, par exemple à 45°, par rapport aux chants 84 et 85. Dans l'état de repos de la cerce 81, illustré à la figure 12, ces deux faces extrêmes 87 sont en appui mutuel en direction circonférentielle, de façon à donner une apparence continue à la cerce 81, à ses faces 82 et 83 et à ses chants 84 et 85.

Toutefois, à partir de cet état de repos et comme on l'a illustré à la figure 13, on peut décaler l'une des faces 87 par rapport à l'autre, en les faisant coulisser longitudinalement l'une sur l'autre, dans un sens compatible avec la coupe en biseau, le cas échéant moyennant une mise en contrainte de la cerce 81, ce qui permet de réduire le diamètre des faces périphériques intérieure 82 et extérieure 83 de celle-ci et, en particulier, de ramener le diamètre de la face périphérique extérieure 83 à une valeur inférieure à celle du diamètre de la face périphérique intérieure 23 de la virole 5 à proximité du bord 25. On peut ainsi insérer la cerce 81, par sa face périphérique intérieure 83, en sens opposé au sens 13, à l'intérieur de la virole 5, par la face périphérique intérieure 23 de celle-ci, jusqu'à ce que la patte 86 la plus proche de la face 87 qui est décalée vers l'amont en référence au sens 13 par rapport à l'autre face 87 prenne appui en sens opposé au sens 13 contre le bord libre 25, ainsi qu'au moins la patte la plus voisine du même côté de la coupure de la cerce 81, et que les autres pattes 86, tout en étant décalées vers l'aval par rapport au bord libre 25, soient distantes de celui-ci d'une distance inférieure à la dimension longitudinale de la cerce 81 entre ses chants 84 et 85, de telle sorte que la face périphérique extérieure 83 de la cerce 81 soit engagée totalement ou partiellement, suivant ses zones, sur la totalité de sa dimension circonférentielle à l'intérieur de la virole 5 par la force 23 de celle-ci. Dans cet état de contraction radiale de la cerce 81, illustré à la figure 13, la bague 4 occupe encore son état de repos.

Ensuite, comme le montre la figure 13, on insère à force, longitudinalement en sens opposé au sens 13, dans la cerce 81 ainsi engagée dans la virole 5 de la bague 4, un mandrin 88 délimité, dans le sens d'un éloignement par rapport à l'axe 9, par une face périphérique extérieure 89 tronconique de révolution autour de cet axe et convergeant en sens opposé au sens 13, entre un diamètre minimal inférieur à celui que présente alors la face périphérique intérieure 82 de la cerce 81, aisément déductible par un homme du métier du diamètre de la face périphérique intérieure 23 de la virole 5 compte tenu de l'épaisseur de la cerce 81 entre ses faces périphériques intérieure 82 et extérieure 83, et un diamètre maximal au moins égal au diamètre que présente la face périphérique intérieure 82 de la cerce 81 à l'état de repos.

Un homme du métier comprendra aisément que cette insertion coaxiale du mandrin 88 dans la cerce 81 et, par l'intermédiaire de celle-ci, dans la virole 5 de la bague 4 provoque une augmentation progressive du diamètre de la face périphérique intérieure 82 de la cerce 81, et par conséquent du diamètre de sa face périphérique extérieure 83 et, corrélativement, des diamètres de la face périphérique intérieure 23 de la virole 5 qui, ainsi, subit une extension radiale et circonférentielle.

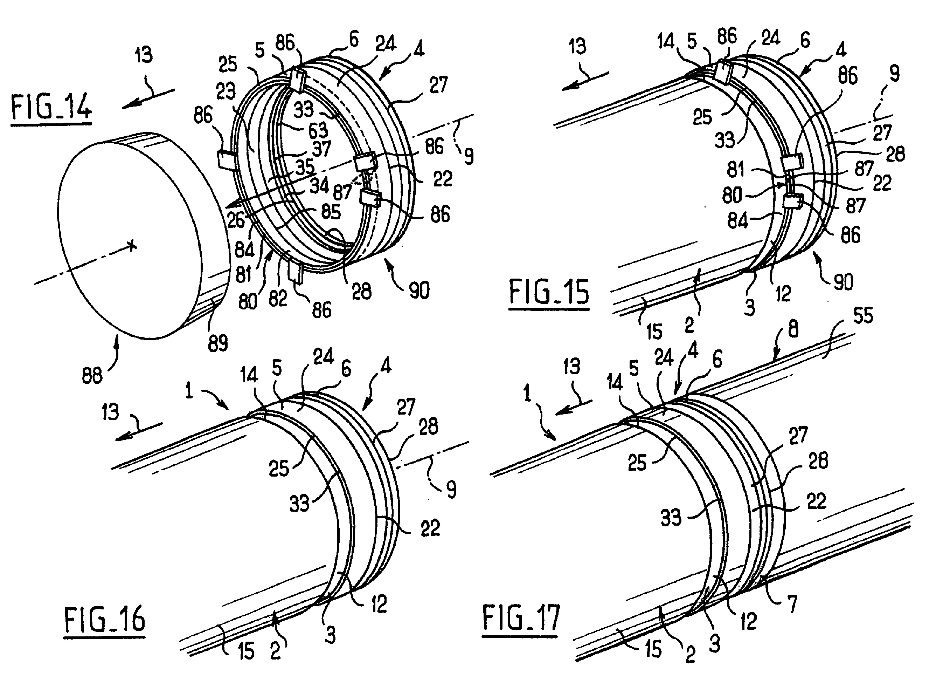

L'introduction coaxiale du mandrin 88, en sens opposé au sens 13, dans la cerce 81 elle-même logée à l'intérieur de la virole 5 se poursuit jusqu'à ce que les faces périphériques intérieure 82 et extérieure 83 retrouvent le diamètre qu'elles présentaient respectivement au repos, et s'accompagne d'un glissement mutuel des faces 87 jusqu'à ce que ces dernières soient à nouveau appliquées à plat l'une contre l'autre et que la cerce 81, dans son ensemble, ait retrouvé sa configuration de repos. Alors, toutes les pattes 86 sont appliquées, en sens opposé au sens 13, contre le bord libre 25 de la virole 5, comme le montre la figure 14, et la bague 4 et l'outil 80 ainsi inséré dans la virole 5 constituent provisoirement un ensemble solidaire 90, qui est stabilisé par l'appui mutuel des faces 87 en direction circonférentielle sous l'effet de la pression radiale appliquée par la virole 5 à la cerce 81 et dont on peut ensuite extraire le mandrin 88 dans le sens 13.

Compte tenu du diamètre que présente alors la face périphérique intérieure 82 de la cerce 81, l'ensemble 90 ainsi constitué peut être emboîté dans le sens 13 sur l'extrémité annulaire 3 du fût 2 et sur la garniture ou pellicule d'étanchéité 18, y compris la surépaisseur 77, de façon libre, jusqu'à la position limite dans laquelle la couronne 34 s'appuie par sa face 35, dans le sens 13, contre la face frontale 11 de l'extrémité annulaire 3 du fût 2, le cas échéant par l'intermédiaire du retour de la garniture ou pellicule d'étanchéité 18, ce qui correspond à l'état illustré à la figure 15.

Alors, en appliquant des poussées ou des chocs dans le sens 13 aux pattes 86, qui sont dimensionnées radialement de façon à former alors une saillie par rapport à la face périphérique extérieure 24 de la virole 5, on peut extraire de celle-ci la cerce 81 par le bord libre 25, tout en conservant à la bague la position limite précitée dans la mesure où l'appui de la couronne 34 par sa face 35 contre la face frontale 11, le cas échéant par l'intermédiaire du retour de la garniture ou pellicule d'étanchéité 18, s'oppose à ce que la bague 4 se déplace alors à l'unisson avec l'outil 80 par rapport au fût 2.

Dès que la cerce 81 échappe, par son chant amont 85, à la virole 5, celle-ci revient par élasticité se plaquer sous pression, par sa face périphérique intérieure 23, contre la face périphérique extérieure 12 de l'extrémité annulaire 3 du fût 2 et contre la garniture ou pellicule d'étanchéité 18, dont la surépaisseur 77 crée un surcroît localisé de pression, suivant un anneau continu, et provoque dans la face périphérique intérieure 23 de la virole 5 la formation de la gorge 79, de préférence par déformation plastique de la virole 5.

De préférence, pour faciliter cette extraction de l'outil 80 par rapport à la virole 5, la dimension longitudinale séparant mutuellement l'épaulement 14 du fût 2 et la face frontale 11 de celui-ci, ou le cas échéant à la limite amont du retour éventuel de la garniture ou pellicule d'étanchéité 18 sur cette face frontale 11, est supérieure à la distance longitudinale entre le bord libre 25 de la virole 5 et la face 35 de la couronne 34 d'une valeur supérieure à la dimension longitudinale de la cerce 81 entre son chant amont 85 et la limite aval des pattes 86 fixées à son chant aval 84, de telle sorte que, lors de son extraction, l'outil 80 ne vienne pas s'arrêter en butant contre l'épaulement 14 avant d'être totalement dégagé de la virole 5.

Ensuite, la cerce 81 peut être ouverte par application d'une traction dans le sens circonférentiel, de part et d'autre de la coupure entre les faces 87 de façon à ouvrir cette coupure, ce qui permet de dégager l'outil 80 en le faisant coulisser soit dans le sens 13 sur la face périphérique extérieure 15 du fût 2, soit en sens opposé au sens 13 sur la bague 4.

Le tuyau 1 est alors terminé, comme on l'a illustré à la figure 16, et la jupe 6 de la bague 4 constitue son about femelle 54 dans lequel on peut ensuite monter, si cela n'a été fait précédemment, une garniture d'étanchéité par exemple du type décrit en 62, à propos des figures 7 et 8, pour insérer ensuite coaxialement l'about mâle 7 de l'autre tuyau 8, comme le montre la figure 17.

La transposition de ce mode de montage de la bague 4 sur le fût 2 en l'absence de garniture ou pellicule d'étanchéité 18, éventuellement remplacée par au moins un anneau d'un matériau plastique d'étanchéité, ou dans le cas d'une conformation différente de la garniture d'étanchéité 18 relève des aptitudes normales d'un homme du métier.

De façon générale, un tel homme du métier comprendra que la mise en oeuvre de la présente invention peut connaître de nombreuses variantes autres que celles qui ont été décrites, notamment par combinaison des variantes décrites en ce qu'elles ont de compatible, sans que l'on sorte pour autant du cadre de cette invention tel que défini par les revendications suivantes.

## Revendications

1. Tuyau ou analogue, du type comportant :
- un fût (2) en béton présentant au moins une extrémité annulaire (3) d'axe longitudinal (9) déterminé, délimitée entre autres par une face périphérique extérieure longitudinale (12) et par une face frontale transversale (11),
- une bague d'about femelle (4), coaxiale à ladite extrémité (3) et solidaire de celle-ci, constituant
→ d'une part une virole longitudinale (5) de solidarisation avec le fût (2), délimitée entre autres par une face périphérique intérieure longitudinale (23) épousant ladite face périphérique extérieure (12) à proximité immédiate de ladite face frontale (11) et
→ d'autre part une jupe longitudinale (6) formant une saillie longitudinale sur ladite face frontale (11) pour s'emboîter coaxialement sur un about mâle (7) d'un autre tuyau (8) ou analogue,
**caractérisé en ce que** :
• la virole (5) se trouve dans un état de tension élastique circonférentielle d'étanchéification vis-à-vis de ladite face périphérique extérieure (12) par application à celle-ci, par ladite face périphérique intérieure (23), d'une pression transversale répartie circonférentiellement de façon continue,
• ladite face périphérique extérieure (12) et ladite face périphérique intérieure (23) sont évasées dans le sens longitudinal (13) d'un éloignement par rapport à ladite face frontale (11) et par rapport à la transition (22) entre la virole (5) et la jupe (6),
• ladite face périphérique intérieure (23) présente un relief annulaire continu (29) d'étanchéité vis-à-vis de ladite face périphérique extérieure (12), en état de compression élastique et/ou plastique transversale contre celle-ci, constituant une seule pièce avec la virole (5),
• ledit relief annulaire continu (29) présente la forme d'un godron (29),
• ledit godron (29) est sensiblement plus proche, longitudinalement, d'un bord libre (25) que la virole (5) présente à l'opposé, longitudinalement, de ladite transition (22) que de ladite transition (22),
• ladite face périphérique intérieure (23) est solidarisée avec ladite face périphérique extérieure (12) par un collage mutuel annulaire, notamment continu (52).

2. Tuyau ou analogue selon la revendication 1, **caractérisé en ce que** ladite tension élastique circonférentielle est telle que ladite face périphérique intérieure (23) soit pour partie solidarisée avec ladite face périphérique extérieure (12) par effet de friction mutuelle résultant de ladite pression transversale.

3. Tuyau ou analogue selon la revendication 2, **caractérisé en ce** quîl comporte au moins une frette (91) entourant coaxialement la virole (5) et placée en tension circonférentielle.

4. Tuyau ou analogue selon l'une quelconque des revendications 1 à 3, **caractérisé en ce que** :
- il comporte une garniture annulaire (18) d'un matériau élastiquement compressible d'étanchéité, interposée en contrainte de compression transversale élastique entre ladite face périphérique intérieure (23) et ladite face périphérique extérieure (12), au moins à proximité immédiate de ladite face frontale (11),
- ladite garniture (18) présente la forme d'une pellicule (18), et
- ladite pellicule (18) s'étend, à partir de ladite face frontale (11), sur une dimension longitudinale inférieure aux dimensions longitudinales respectives de ladite face périphérique extérieure (12) et de ladite face périphérique intérieure (23).

5. Tuyau ou analogue selon la revendication 4, **caractérisé en ce que** ladite face périphérique extérieure (12) présente un décrochement annulaire localisé (17) à proximité immédiate de ladite face frontale (11) et **en ce que** ladite garniture (18) est logée, sur une partie de sa dimension transversale, dans ledit décrochement (17).

6. Tuyau ou analogue selon l'une quelconque des revendications 4 et 5, **caractérisé en ce que** ladite face périphérique intérieure (23) est solidarisée avec ladite pellicule (18) par un collage mutuel annulaire, notamment continu (53).

7. Tuyau ou analogue selon l'une quelconque des revendications 1 à 6, **caractérisé en ce que** la bague (4) présente intérieurement des moyens (34) de butée longitudinale vis-à-vis de ladite face frontale (11), à la transition (22) entre la virole (5) et la jupe (6), formant une saillie transversale par rapport à ladite face périphérique intérieure (23) et placés en regard de ladite face frontale (11).

8. Tuyau ou analogue selon la revendication 7, **caractérisé en ce que** la jupe (6) présente également une face périphérique intérieure longitudinale (26) et **en ce que** les moyens de butée (34) forment également une saillie transversale par rapport à celle-ci pour servir de butée longitudinale au dit about mâle (7).

9. Tuyau ou analogue selon la revendication 8, **caractérisé en ce que** les moyens de butée (34) comportent une couronne transversale (34) continue circonférentiellement, présentant une dimension longitudinale uniforme.

10. Tuyau ou analogue selon l'une quelconque des revendications 7 à 9, dans sa relation de dépendance vis-à-vis de l'une quelconque des revendications 4 à 6, **caractérisé en ce que** ladite pellicule (18) forme un retour annulaire transversal sur ladite face frontale (11) et **en ce que** les moyens de butée longitudinale (34) s'appuient longitudinalement sur ladite face frontale (11) par l'intermédiaire dudit retour.

11. Tuyau ou analogue selon l'une quelconque des revendications 1 à 10, **caractérisé en ce que** la jupe (6) présente intérieurement une conformation (63) propre à recevoir et retenir au moins une garniture annulaire transversale (62) d'étanchéité vis-à-vis de l'about mâle (7).

12. Tuyau ou analogue selon la revendication 11, **caractérisé en ce que** la jupe (6) porte intérieurement, solidairement, au moins une garniture annulaire transversale (62) d'étanchéité vis-à-vis de l'about mâle (7).

13. Bague d'about femelle pour la réalisation d'un tuyau ou analogue selon l'une quelconque des revendications 1 à 12, présentant un axe longitudinal (9) et constituant
→ d'une part une virole longitudinale (5) délimitée entre autres par une face périphérique intérieure longitudinale (23) et
→ d'autre part une jupe longitudinale (6) située dans le prolongement longitudinal de la virole (5),
**caractérisée en ce que** :
• la virole (5) est élastiquement extensible circonférentiellement,
• ladite face périphérique intérieure (23) est évasée dans le sens longitudinal (13) d'un éloignement par rapport à la transition (22) entre la virole (5) et la jupe (6),
• ladite face périphérique intérieure (23) présente un relief annulaire continu (29) élastiquement et/ou plastiquement compressible transversalement, constituant une seule pièce avec la virole (5),
• ledit relief annulaire continu (29) présente la forme d'un godron (29), et
• ledit godron (29) est sensiblement plus proche, longitudinalement, d'un bord libre (25) que la virole (5) présente à l'opposé, longitudinalement, de ladite translation que de ladite translation (22).

14. Bague d'about femelle selon la revendication 13, **caractérisée en ce qu'**elle présente intérieurement des moyens de butée (34), à la transition (22) entre la virole (5) et la jupe (6), et formant une saillie transversale par rapport à ladite face périphérique intérieure (23).

15. Bague d'about femelle selon la revendication 14, **caractérisée en ce que** la jupe (6) présente également une face périphérique intérieure longitudinale (26) et **en ce que** les moyens de butée (34) forment également une saillie transversale par rapport à celle-ci.

16. Bague d'about femelle selon la revendication 15, **caractérisée en ce que** les moyens de butée (34) comportent une couronne transversale (34) continue circonférentiellement, présentant une dimension longitudinale uniforme.

17. Bague d'about femelle selon l'une quelconque des revendications 13 à 16, **caractérisée en ce que** la jupe (6) présente intérieurement une conformation (63) propre à recevoir et retenir au moins une garniture annulaire transversale d'étanchéité (62).

18. Bague d'about femelle selon la revendication 17, **caractérisée en ce que** la jupe (6) porte intérieurement, solidairement, au moins une garniture annulaire transversale d'étanchéité (62).

19. Bague d'about femelle selon l'une quelconque des revendications 13 à 18, **caractérisée en ce que** la virole (5) et la jupe (6) présentent une forme et des dimensions transversales respectives propres à permettre un emboîtement coaxial mutuel amovible de plusieurs bagues (4) par emboîtement coaxial mutuel de la virole (5) de l'une avec la jupe (6) d'une autre.

20. Procédé de fabrication d'un tuyau ou analogue selon l'une quelconque des revendications 1 à 12, du type comportant :
- un fût (2) en béton présentant au moins une extrémité annulaire (3) d'axe longitudinal (9) déterminé, délimitée entre autres par une face périphérique extérieure longitudinale (12) et par une face frontale transversale (11),
- une bague d'about femelle (4), coaxiale à ladite extrémité (3) et solidaire de celle-ci, constituant
→ d'une part une virole (5) longitudinale de solidarisation avec le fût (2), délimitée entre autres par une face périphérique intérieure longitudinale (23) épousant ladite face périphérique extérieure (12) à proximité immédiate de ladite face frontale (11) et
→ d'autre part une jupe (6) longitudinale formant une saillie longitudinale sur ladite face frontale (11) pour s'emboîter coaxialement sur un about mâle (7) d'un autre tuyau (8) ou analogue,
ledit procédé comportant une étape initiale consistant à préfabriquer la bague (4) et étant **caractérisé en ce qu'**il comporte la succession des étapes consistant à
a) préfabriquer le fût (2) indépendamment de la bague, la bague (4) étant conforme à l'une quelconque des revendications 13 à 19 et dimensionnée de telle sorte que, à une distance longitudinale déterminée de la transition (22) entre la virole (5) et la jupe (6) et en l'absence d'extension circonférentielle de la bague (4), ladite face périphérique intérieure (23) présente des dimensions transversales inférieures à celles que ladite face périphérique extérieure (12) présente à la même distance longitudinale de ladite face frontale (11), mais suffisamment proches de celles-ci pour pouvoir être augmentées jusqu'à celles-ci par mise en tension élastique circonférentielle de la virole (5),
b) engager coaxialement la virole (5) sur l'extrémité annulaire (3) du fût (2) jusqu'à une position relative déterminée dans laquelle ladite transition (22) coïncide longitudinalement avec ladite face frontale (11), et solidariser la virole (5) avec le fût (2) dans ladite position relative déterminée en plaçant la virole (5) dans un état de tension élastique circonférentielle d'étanchéification vis-à-vis de ladite face périphérique extérieure (12) par application à celle-ci, par ladite face périphérique intérieure (23), d'une pression transversale répartie circonférentiellement de façon continue,
et **en ce que** :
• respectivement lors de l'étape initiale et lors de l'étape a), on préfabrique la bague (4) et le fût (2) de telle sorte que ladite face périphérique extérieure (12) et ladite face périphérique intérieure (23) soient évasées par rapport à l'axe longitudinal respectif (9), dans le sens longitudinal (13) d'un éloignement par rapport à ladite face frontale (11) et par rapport à la transition (22) entre la virole (5) et la jupe (6), respectivement, et que ladite face périphérique intérieure (23) présente un godron (29) formant un relief annulaire continu, élastiquement et/ou plastiquement compressible transversalement, constituant une seule pièce avec la virole (5) et sensiblement plus proche, longitudinalement, d'un bord libre (25) que la virole (5) présente à l'opposé, longitudinalement, de ladite translation (22) que de ladite translation (22),
• entre les étapes a) et b), on dépose un anneau, notamment continu, de colle (52) sur une zone localisée de ladite face périphérique extérieure (12), choisie de telle sorte que, lors de la mise en oeuvre de l'étape b) et par la suite, cette zone constitue une zone de contact mutuel, par l'intermédiaire de ladite colle (52), et d'application de ladite pression transversale, et que pendant que l'on engage coaxialement la virole (5) sur l'extrémité annulaire (3) du fût (2) lors de la mise en oeuvre de l'étape b), le godron (29) facilite un entraînement de ladite colle (52) par la virole (5) et la création d'une pellicule de ladite colle (52), et
• l'on choisit ladite colle (52) de telle sorte qu'elle constitue à l'état frais un lubrifiant facilitant une mise en oeuvre de l'étape b) par engagement coaxial, progressif, à force, de la virole (5) sur l'extrémité annulaire (3) du fût (3) et assure ensuite une solidarisation mutuelle.

21. Procédé selon la revendication 20, **caractérisé en ce que** ladite tension élastique circonférentielle est telle que ladite face périphérique intérieure (23) soit pour partie solidarisée avec ladite face périphérique extérieure (12) par un effet de friction mutuelle résultant de ladite pression transversale.

22. Procédé selon la revendication 21, **caractérisé en ce que** l'on renforce ledit effet par frettage de la virole (5) dans ladite position relative déterminée.

23. Procédé selon l'une quelconque des revendications 20 à 22, **caractérisé en ce que** l'on facilite l'engagement coaxial de la virole (5) sur l'extrémité annulaire (3) du fût (2), lors de l'étape b), en chauffant la virole (5).

24. Procédé selon l'une quelconque des revendications 20 à 23, **caractérisé en ce que**, lors de l'étape a), on préfabriqué le fût (2) de telle sorte que ladite face périphérique extérieure (12) soit plus évasée que ladite face périphérique intérieure (23) par rapport à l'axe longitudinal respectif (9).

25. Procédé selon l'une quelconque des revendications 20 à 24, **caractérisé en ce que** :
- entre les étapes a) et b), on met en place sur ladite face périphérique extérieure (12) une garniture (18) d'un matériau élastiquement compressible d'étanchéité au moins à proximité immédiate de ladite face frontale (11),
- l'on choisit ladite garniture (18) de telle sorte qu'elle présente la forme d'une pellicule (18),
- l'on choisit et l'on dispose ladite pellicule (18) de telle sorte qu'elle s'étende, à partir de ladite face frontale (11), sur une dimension longitudinale inférieure aux dimensions longitudinales respectives de ladite face périphérique extérieure (12) et de ladite face périphérique intérieure (23), et
- lors de l'étape b), on met ladite garniture (18) en contrainte de compression transversale élastique entre ladite face périphérique intérieure (23) et ladite face périphérique extérieure (12).

26. Procédé selon la revendication 25, **caractérisé en ce que**, lors de l'étape a), on préfabrique le fût (2) de telle sorte que ladite face périphérique extérieure (12) présente un décrochement annulaire localisé (17) à proximité immédiate de ladite face frontale (11),
et **en ce que**, entre les étapes a) et b), on met en place ladite garniture (18) en la logeant, sur une partie de sa dimension transversale, dans ledit décrochement (17).

27. Procédé selon l'une quelconque des revendications 25 et 26, **caractérisé en ce que** :
- entre les étapes a) et b), après avoir mis en place ladite pellicule (18), on dépose un anneau, notamment continu, de colle (53) sur une zone localisée de ladite pellicule (18) choisie de telle sorte que, lors de la mise en oeuvre de l'étape b) et par la suite, cette zone constitue une zone de contact mutuel, par l'intermédiaire de ladite colle (53), et d'application de ladite pression transversale, et que, pendant que l'on engage coaxialement la virole (5) sur l'extrémité annulaire (3) du fût (2), lors de la mise en oeuvre de l'étape b), le godron (29) facilite un entraînement de ladite colle (53) par la virole (5) et la création d'une pellicule de ladite colle (53), et
- l'on choisit ladite colle (3) de telle sorte qu'elle constitue à l'état frais un lubrifiant facilitant une mise en oeuvre de l'étape b) par engagement coaxial, progressif, à force, de la virole (5) sur l'extrémité annulaire (3) du fût (2) et assure ensuite une solidarisation mutuelle.

28. Procédé selon l'une quelconque des revendications 20 à 27, **caractérisé en ce que**, dans le cas d'une bague (4) conforme à l'une quelconque des revendications 14 à 16, lors de l'étape b), on arrête l'engagement coaxial de la virole (5) sur l'extrémité annulaire (3) du fût (2) lorsque les moyens de butée longitudinale (34) butent contre ladite face frontale (11).

29. Procédé selon la revendication 28, dans sa relation de dépendance vis-à-vis de l'une quelconque des revendications 25 à 27, **caractérisé en ce que**, entre les étapes a) et b), on forme un retour annulaire transversal de ladite pellicule (18) sur ladite face frontale (11) et **en ce que**, lors de l'étape b), on arrête ledit engagement coaxial lorsque les moyens de butée longitudinale (34) butent contre ladite face frontale (11) par l'intermédiaire dudit retour.

30. Procédé selon l'une quelconque des revendications 20 à 29, **caractérisé en ce que**, dans le cas d'une bague (4) conforme à la revendication 17, lors de l'étape a) ou postérieurement à l'étape b), on solidarise avec la jupe (6), à l'intérieur de celle-ci, au moins une garniture annulaire transversale (62) d'étanchéité vis-à-vis de l'about mâle.

## Patentansprüche

1. Rohr oder dergleichen, vom Typ umfassend:
- einen Betonschaft (2), der mindestens ein ringförmiges Ende (3) mit einer definierten Längsachse (9) aufweist, welches unter anderem durch eine längsverlaufende Außenumfangsfläche (12) und durch eine vordere Querschnittsfläche (11) abgegrenzt ist,
- einen zu dem Ende (3) koaxialen und fest mit diesem verbundenen weiblichen Abschlussring (4), der:
→ zum einen eine längsverlaufende Hülse (5) zur festen Verbindung mit dem Schaft (2), die unter anderem durch eine längsverlaufende Innenumfangsfläche (23) abgegrenzt ist, welche sich in unmittelbarer Nähe der vorderen Fläche (11) an die Außenumfangsfläche (12) anpasst, und
→ zum anderen einen längsverlaufenden Mantel (6) bildet, der auf der vorderen Fläche (11) eine längsverlaufende Auskragung bildet, um sich koaxial mit einem männlichen Endstück (7) eines anderen Rohres (8) oder dergleichen zusammenzufügen,
**dadurch gekennzeichnet, dass**:
• sich die Hülse (5) gegenüber der Außenumfangsfläche (12) durch Ausüben eines gleichmäßig über den Umfang verteilten Querdrucks auf diese durch die Innenumfangsfläche (23) in einem Zustand elastischer Umfangsspannung zur Abdichtung gegenüber der Außenumfangsfläche (12) befindet.
• die Außenumfangsfläche (12) und die Innenumfangsfläche (23) in der Längsrichtung (13) über einen Abstand erweitert sind bezüglich der vorderen Fläche (11) und bezüglich dem Übergang (22) zwischen der Hülse (5) und dem Mantel (6),
• die Innenumfangsfläche (23) ein durchgehendes Ringrelief (29) zur Abdichtung gegenüber der Außenumfangsfläche (12), im Zustand des elastischen oder plastischen Querdrucks gegen diese, aufweist, das mit der Hülse (5) ein einziges Teil bildet,
• das durchgehende Ringrelief (29) die Form eines Godron (29) aufweist,
• der Godron (29) in Längsrichtung deutlich näher an einem freien Rand (25) liegt, den die Hülse (5) in Längsrichtung entgegengesetzt zum Übergang (22) aufweist, als an dem Übergang (22),
• die Innenumfangsfläche (23) mit der Außenumfangsfläche (12) durch ringförmiges, insbesondere durchgehendes gegenseitiges Verkleben fest verbunden ist (52).

2. Rohr oder dergleichen nach Anspruch 1, **dadurch gekennzeichnet, dass** die Umfangsspannung von der Art ist, dass die Innenumfangsfläche (23) mit der Außenumfangsfläche (12) durch einen gegenseitigen Reibungseffekt, der sich aus dem Querdruck ergibt, teilweise fest verbunden ist.

3. Rohr oder dergleichen nach Anspruch 2, **dadurch gekennzeichnet, dass** es mindestens einen Mantelring (91) umfasst, der die Hülse (5) koaxial umgibt und unter Umfangsspannung steht.

4. Rohr oder dergleichen nach einem der Ansprüche 1 bis 3, **dadurch gekennzeichnet, dass**:
- es einen ringförmigen Belag (18) aus einem elastisch komprimierbarem Dichtungsmaterial umfasst, der, zumindest in unmittelbarer Nähe von der vorderen Fläche (11), unter elastischer Querdruckbelastung zwischen der Innenumfangsfläche (23) und der Außenumfangsfläche (12) eingesetzt ist,
- der Belag (18) die Form eines Films (18) aufweist, und
- sich der Film (18) von der vorderen Fläche (11) über eine Länge erstreckt, die kleiner ist als die jeweiligen Längsabmessungen der Außenumfangsfläche (12) und der Innenumfangsfläche (23).

5. Rohr oder dergleichen nach Anspruch 4, **dadurch gekennzeichnet, dass** die Außenumfangsfläche (12) in unmittelbarer Nähe von der vorderen Fläche (11) einen lokalisierten ringförmigen Absatz (17) aufweist, und **dadurch**, dass der Belag (18) über einen Teil seiner Querabmessung in diesem Absatz (17) sitzt.

6. Rohr oder dergleichen nach einem der Ansprüche 4 und 5, **dadurch gekennzeichnet, dass** die Innenumfangsfläche (23) mit dem Film (18) durch ringförmiges, insbesondere durchgehendes gegenseitiges Verkleben fest verbunden ist (53).

7. Rohr oder dergleichen nach einem der Ansprüche 1 bis 6, **dadurch gekennzeichnet, dass** der Ring (4) innen, am Übergang (22) zwischen der Hülse (5) und dem Mantel (6), Längsanschlagmittel (34) für die vordere Fläche (11) aufweist, die einen zur Innenumfangsfläche (23) quer verlaufenden Vorsprung bilden und der vorderen Fläche (11) gegenüber liegen.

8. Rohr oder dergleichen nach Anspruch 7, **dadurch gekennzeichnet, dass** der Mantel (6) ebenfalls eine längsverlaufende Innenumfangsfläche (26) aufweist, und **dadurch**, dass die Anschlagmittel (34) auch einen zu dieser quer verlaufenden Vorsprung bilden, um dem männlichen Endstück (7) als Längsanschtag zu dienen.

9. Rohr oder dergleichen nach Anspruch 8, **dadurch gekennzeichnet, dass** die Anschlagmittel (34) einen im Umfang durchgehenden Querring (34) umfassen, der eine einheitliche Längsabmessung aufweist.

10. Rohr oder dergleichen nach einem der Ansprüche 7 bis 9 in deren Rückbezug auf einen der Ansprüche 4 bis 6, **dadurch gekennzeichnet, dass** der Film (18) auf der vorderen Fläche (11) einen querverlaufenden ringförmigen Umschlag bildet, und **dadurch**, dass die Längsanschlagmittel (34) mittels dieses Umschlags in Längsrichtung auf der vorderen Fläche (11) aufliegen.

11. Rohr oder dergleichen nach einem der Ansprüche 1 bis 10, **dadurch gekennzeichnet, dass** der Mantel (6) innen eine Form (63) aufweist, die dafür geeignet ist, mindestens einen querverlaufenden ringförmigen Belag (62) zur Abdichtung gegenüber dem männlichen Endstück (7) aufzunehmen und ' zurückzuhalten.

12. Rohr oder dergleichen nach Anspruch 11, **dadurch gekennzeichnet, dass** der Mantel (6) innen, befestigt, mindestens einen querverlaufenden ringförmigen Belag (62) zur Abdichtung gegenüber dem männlichen Endstück (7) trägt.

13. Weiblicher Abschlussring zur Realisierung eines Rohrs oder dergleichen nach einem der Ansprüche 1 bis 12, der eine Längsachse (9) aufweist und
→ zum einen eine längsverlaufende Hülse (5), die unter anderem durch eine längsverlaufende Innenumfangsfläche (23) abgegrenzt ist, und
→ zum anderen einen längsverlaufenden Mantel (6) bildet, der sich in der Längsverlängerung der Hülse (5) befindet,
**dadurch gekennzeichnet, dass**:
• die Hülse (5) im Umfang elastisch dehnbar ist,
• die Innenumfangsfläche (23) in der Längsrichtung (13) über einen Abstand bezüglich dem Übergang (22) zwischen der Hülse (5) und dem Mantel (6) erweitert ist,
• die Innenumfangsfläche (23) ein durchgehendes, in Querrichtung elastisch oder plastisch komprimierbares Ringrelief (29) aufweist, das mit der Hülse (5) ein einziges Teil bildet,
• das durchgehende Ringrelief (29) die Form eines Godron (29) aufweist, und
• der Godron (29) in Längsrichtung deutlich näher an einem freien Rand (25) liegt, den die Hülse (5) in Längsrichtung entgegengesetzt zum Übergang aufweist, als an dem Übergang (22),

14. Weiblicher Abschlussring nach Anspruch 13, **dadurch gekennzeichnet, dass** er innen, am Übergang (22) zwischen der Hülse (5) und dem Mantel (6), Anschlagmittel (34) aufweist, und die einen zur Innenumfangsfläche (23) quer verlaufenden Vorsprung bilden.

15. Weiblicher Abschlussring nach Anspruch 14, **dadurch gekennzeichnet, dass** der Mantel (6) ebenfalls eine längsverlaufende Innenumfangsfläche (26) aufweist, und **dadurch**, dass die Anschlagmittel (34) auch einen zu dieser quer verlaufenden Vorsprung bilden.

16. Weiblicher Abschlussring nach Anspruch 15, **dadurch gekennzeichnet, dass** die Anschlagmittel (34) einen im Umfang durchgehenden Querring (34) umfassen, der eine einheitliche Längsabmessung aufweist.

17. Weiblicher Abschlussring nach einem der Ansprüche 13 bis 16, **dadurch gekennzeichnet, dass** der Mantel (6) innen eine Form (63) aufweist, die dafür geeignet ist, mindestens einen querverlaufenden ringförmigen Dichtungsbelag (62) aufzunehmen und zurückzuhalten.

18. Weiblicher Abschlussring nach Anspruch 17, **dadurch gekennzeichnet, dass** der Mantel (6) innen, befestigt, mindestens einen querverlaufenden ringförmigen Dichtungsbelag (62) trägt.

19. Weiblicher Abschlussring nach einem der Ansprüche 13 bis 18, **dadurch gekennzeichnet, dass** die Hülse (5) und der Mantel (6) jeweils eine Form und entsprechende Querabmessungen aufweisen, die dafür geeignet sind, ein koaxiales lösbares Zusammenfügen mehrerer Ringe (4) durch koaxiales Zusammenfügen der Hülse (5) des einen mit dem Mantel (6) eines anderen zu ermöglichen.

20. Verfahren zur Herstellung eines Rohrs oder dergleichen nach einem der Ansprüche 1 bis 12, vom Typ umfassend:
- einen Betonschaft (2), der mindestens ein ringförmiges Ende (3) mit einer festgelegten definierten Längsachse (9) aufweist, welches unter anderem durch eine längsverlaufende Außenumfangsfläche (12) und durch eine vordere Querschnittsfläche (11) abgegrenzt ist,
- einen zu dem Ende (3) koaxialen und fest mit diesem verbundenen weiblichen Abschlussring (4), der:
→ zum einen eine längsverlaufende Hülse (5) zur festen Verbindung mit dem Schaft (2), die unter anderem durch eine längsverlaufende Innenumfangsfläche (23) abgegrenzt ist, welche sich in unmittelbarer Nähe der vorderen Fläche (11) an die Außenumfangsfläche (12) anpasst, und
→ zum anderen einen längsverlaufenden Mantel (6) bildet, der auf der vorderen Fläche (11) eine längsverlaufende Auskragung bildet, um sich koaxial mit einem männlichen Endstück (7) eines anderen Rohres (8) oder dergleichen zusammenzufügen,
wobei das Verfahren einen Anfangsschritt umfasst, der darin besteht, den Ring (4) vorzufertigen und wobei es **dadurch gekennzeichnet ist, dass** es die Abfolge der Schritte umfasst, die darin bestehen
a) den Schaft (2) unabhängig vom Ring vorzufertigen, wobei der Ring (4) einem der Ansprüche 13 bis 19 entspricht und so dimensioniert ist, dass die Innenumfangsfläche (23) in einem definierten Längsabstand zum Übergang (22) zwischen der Hülse (5) und dem Mantel (6) und ohne zirkumferentielle Dehnung des Ringes (4) Querabmessungen aufweist, die unter denjenigen liegen, welche die Außenumfangsfläche (12) im gleichen Längsabstand zur vorderen Fläche (11) aufweist, aber ausreichend nahe an diesen liegen, um durch zirkumferentielles Spannen der Hülse (5) bis auf diese erhöht zu werden,
b) die Hülse (5) koaxial auf das ringförmige Ende (3) des Schafts (2) zu schieben, bis zu einer definierten relativen Position, in welcher der Übergang (22) in Längsrichtung mit der vorderen Fläche (11) zusammenfällt, und festes Verbinden der Hülse (5) mit dem Schaft (2) in dieser definierten relativen Position, indem die Hülse (5) in einen Zustand der elastischen Umfangsspannung zur Abdichtung gegenüber der Außenumfangsfläche (12) versetzt wird, durch Ausüben auf diese eines gleichmäßig über den Umfang verteilten Querdrucks durch die Innenumfangsfläche (23),
und darin, dass:
• der Ring (4) und der Schaft (2) im Anfangsschritt beziehungsweise im Schritt a) so vorgefertigt werden, dass die Außenumfangsfläche (12) und die Innenumfangsfläche (23) bezüglich der Längsachse (9) in der Längsrichtung (13) über einen Abstand erweitert sind bezüglich der vorderen Fläche (11) beziehungsweise bezüglich dem Übergang (22) zwischen der Hülse (5) und dem Mantel (6), und so, dass die Innenumfangsfläche (23) einen Godron (29) aufweist, der ein durchgehendes, in Querrichtung elastisch und/oder plastisch komprimierbares Ringrelief (29) bildet, das mit der Hülse (5) ein einziges Teil bildet und deutlich näher an einem freien Rand (25) liegt, den die Hülse (5) in Längsrichtung entgegengesetzt zum Übergang (22) aufweist, als an dem Übergang (22),
• zwischen den Schritten a) und b) ein Ring, insbesondere durchgehend, aus Klebstoff (53) auf einen lokalisierten Bereich der Außenumfangsfläche (12) aufgetragen wird, der so gewählt wird, dass dieser Bereich bei der Ausführung des Schrittes b) und danach, über diesen Klebstoff (52) einen Bereich des gegenseitigen Kontaktes und der Ausübung des Querdrucks bildet, und so, dass während die Hülse (5) bei der Ausführung des Schrittes b) koaxial auf das ringförmige Ende (3) des Schafts (2) geschoben wird, der Godron (29) ein Mitführen des Klebstoffs (52) durch die Hülse (5) und die Bildung eines Films aus diesem Klebstoff (52) erleichtert, und
• der Klebstoff (52) so gewählt wird, dass er im frischen Zustand ein Schmiermittel darstellt, das eine Ausführung des Schrittes b) durch progressives koaxiales Schieben unter Kraftaufwand der Hülse (5) auf das ringförmige Ende (3) des Schafts (2) erleichtert und dann eine gegenseitige feste Verbindung gewährleistet.

21. Verfahren nach Anspruch 20, **dadurch gekennzeichnet, dass** die Ringspannkraft derart ist, dass die Innenumfangsfläche (23) mit der Außenumfangsfläche (12) durch einen gegenseitigen Reibungseffekt, der sich aus dem Querdruck ergibt, teilweise fest verbunden ist.

22. Verfahren nach Anspruch 21, **dadurch gekennzeichnet, dass** dieser Effekt durch Schrumpfen der Hülse (5) in der definierten relativen Position verstärkt wird.

23. Verfahren nach einem der Ansprüche 20 bis 22, **dadurch gekennzeichnet, dass** das koaxiale Schieben der Hülse (5) auf das ringförmige Ende (3) des Schafts (2) im Schritt b) durch Erwärmen der Hülse (5) erleichtert wird.

24. Verfahren nach einem der Ansprüche 20 bis 23, **dadurch gekennzeichnet, dass** der Schaft (2) im Schritt a) so vorgefertigt wird, dass die Außenumfangsfläche (12) bezüglich der entsprechenden Längsachse (9) stärker erweitert ist als die Innenumfangsfläche (23).

25. Verfahren nach einem der Ansprüche 20 bis 24, **dadurch gekennzeichnet, dass**:
- zwischen den Schritten a) und b) auf der Außenumfangsfläche (12), zumindest in unmittelbarer Nähe von der vorderen Fläche (11), ein Belag (18) aus einem elastisch komprimierbarem Dichtungsmaterial plaziert wird,
- der Belag (18) so gewählt wird, dass er die Form eines Films (18) aufweist,
- der Film (18) so gewählt und so angeordnet wird, dass er sich von der vorderen Fläche (11) über eine Länge erstreckt, die kleiner den jeweiligen Längsabmessungen der Außenumfangsfläche (12) und der Innenumfangsfläche (23) ist, und
- der Film (18) im Schritt b) unter elastische Querdruckbelastung zwischen der Innenumfangsfläche (23) und der Außenumfangsfläche (12) gesetzt wird.

26. Verfahren nach Anspruch 25, **dadurch gekennzeichnet, dass** der Schaft (2) im Schritt a) so vorgefertigt wird, dass die Außenumfangsfläche (12) in unmittelbarer Nähe von der vorderen Fläche (11) einen lokalisierten ringförmigen Absatz (17) aufweist,
und **dadurch**, dass der Belag (18) zwischen den Schritten a) und b) plaziert wird, indem er über einen Teil seiner Querabmessung in diesen Absatz (17) eingesetzt wird.

27. Verfahren nach einem der Ansprüche 25 und 26, **dadurch gekennzeichnet, dass**:
- zwischen den Schritten a) und b), nachdem der Film (18) plaziert wurde, ein Ring, insbesondere durchgehend, aus Klebstoff (53) auf einen lokalisierten Bereich dieses Films (18) aufgetragen wird, der so gewählt wird, dass dieser Bereich bei der Ausführung des Schrittes b) und danach über diesen Klebstoff (53) einen Bereich des gegenseitigen Kontaktes und der Ausübung des Querdrucks bildet, und so, dass während die Hülse (5) bei der Ausführung des Schrittes b) koaxial auf das ringförmige Ende (3) des Schafts (2) geschoben wird der Godron (29) ein Mitführen des Klebstoffs (53) durch die Hülse (5) und die Bildung eines Films aus diesem Klebstoff (53) erleichtert, und
- der Klebstoff (53) so gewählt wird, dass er im frischen Zustand ein Schmiermittel darstellt, das eine Ausführung des Schrittes b) durch progressives koaxiales Schieben unter Kraftaufwand der Hülse (5) auf das ringförmige Ende (3) des Schafts (2) erleichtert und dann eine gegenseitige feste Verbindung gewährleistet.

28. Verfahren nach einem der Ansprüche 20 bis 27, **dadurch gekennzeichnet, dass** im Fall eines Ringes (4) gemäß einem der Ansprüche 14 bis 16 das koaxiale Schieben der Hülse (5) auf das ringförmige Ende (3) des Schafts (2) im Schritt b) eingestellt wird, wenn die Längsanschlagmittel (34) gegen die vordere Fläche (11) stoßen.

29. Verfahren nach Anspruch 28 in Rückbezug auf einen der Ansprüche 25 bis 27, **dadurch gekennzeichnet, dass** zwischen den Schritten a) und b) auf der vorderen Fläche (11) ein querverlaufender ringförmiger Umschlag des Films (18) gebildet wird, und **dadurch**, dass das koaxiale Schieben im Schritt b) eingestellt wird, wenn die Längsanschlagmittel (34) mittels dieses Umschlags gegen die vordere Fläche (11) stoßen.

30. Verfahren nach einem der Ansprüche 20 bis 29, **dadurch gekennzeichnet, dass** im Fall eines Ringes (4) gemäß Anspruch 17 im Schritt a) oder nach dem Schritt b) im Inneren des Mantels mindestens ein querverlaufender ringförmiger Belag (62) zur Abdichtung gegenüber dem männlichen Endstück fest mit dem Mantel (6) verbunden wird.

## Claims

1. A pipe or the like, of the type comprising:
- a concrete cylinder (2) possessing at least one annular end (3) of determined longitudinal axis (9), defined amongst other things by a longitudinal outside peripheral face (12) and by a transverse front face (11);
- a female end ring (4) coaxial with said end (3) and secured thereto, the ring consisting of:
- firstly a longitudinal ferrule (5) for securing to the cylinder (2), the ferrule being defined amongst other things by a longitudinal inside peripheral face (23) fitting snugly against said outside peripheral face (12) in the immediate vicinity of said front face (11); and
- secondly a longitudinal skirt (6) projecting longitudinally over said front face (11) to engage coaxially on a male endpiece (7) of another pipe (8) or the like,
**characterized in that**:
· the ferrule (5) is in a state of circumferential elastic tension providing sealing relative to said outside peripheral face (12) by said inside peripheral face applying thereagainst transverse pressure which is circumferentially distributed in continuous manner;
· said outside peripheral face (12) and said inside peripheral face (23) flare in the longitudinal direction (13) going away from said front face (11) and relative to the transition (22) between the ferrule (5) and the skirt (6);
· said inside peripheral face (23) presents a continuous annular sealing portion in relief (29) facing said outside peripheral face (12) in a state of elastic and/or plastic transverse compression thereagainst, formed integrally with the ferrule (5);
· said continuous annular portion in relief (29) is in the form of a rib (29);
· said rib (29) is longitudinally substantially further from said transition (22) than it is from a free edge (25) that the ferrule (5) presents longitudinally remote from said transition (22); and
· said inside peripheral face (23) is fastened to said outside peripheral face (12) by annular adhesive between them, in particular continuous adhesive (52).

2. A pipe or the like according to claim 1, **characterized in that** said circumferential elastic tension is such that said inside peripheral face (23) is fastened, in part, to said outside peripheral face (12) by the mutual friction effect that results from said transverse pressure.

3. A pipe or the like according to claim 2, **characterized in that** it includes at least one band (91) coaxially surrounding the ferrule (5) and placed in circumferential tension.

4. A pipe or the like according to any one of claims 1 to 3, **characterized in that**:
- it includes an annular sealing gasket (18) of an elastically compressible material interposed in elastic transverse compression stress between said inside peripheral face (23) and said outside peripheral face (12), at least in the immediate vicinity of said front face (11);
- said gasket (18) is in the form of a film (18); and
- said film (18) extends from said front face (11) over a longitudinal dimension shorter than the respective longitudinal dimensions of said outside peripheral face (12) and of inside peripheral face (23).

5. A pipe or the like according to claim 4, **characterized in that** said outside peripheral face (12) presents a localized annular setback (17) in the immediate vicinity of said front face (11) and **in that** said gasket (18) is received over a fraction of its transverse dimension in said setback (17).

6. A pipe or the like according to claim 4 or claim 5, **characterized in that** said inside peripheral face (23) is fastened to said film (18) by annular adhesive between them, in particular continuous annular adhesive (53).

7. A pipe or the like according to any one of claims 1 to 6, **characterized in that** the inside of the ring (4) presents longitudinal abutment means (34) for engaging said front face (11), the abutment means being located at the transition (22) between the ferrule (5) and the skirt (6) projecting transversely relative to said inside peripheral face (23) and being placed facing said front face (11).

8. A pipe or the like according to claim 7, **characterized in that** the skirt (6) also presents a longitudinal inside peripheral face (26), and **in that** the abutment means (34) also form a transverse projection relative thereto to serve as a longitudinal abutment for said male endpiece (7).

9. A pipe or the like according to claim 8, **characterized in that** the abutment means (34) comprise a transverse annulus (34) that is circumferentially continuous, and that presents a longitudinal dimension that is uniform.

10. A pipe or the like according to any one of claims 7 to 9 as dependent on any one of claims 4 to 6, **characterized in that** said film (18) forms an annular rim extending transversely on said front face (11), and **in that** the longitudinal abutment means (34) press longitudinally against said front face (11) via said rim.

11. A pipe or the like according to any one of claims 1 to 10, **characterized in that** the inside of the skirt (6) presents a shape (63) suitable for receiving and holding at least one transverse annular sealing gasket (62) for engaging the male endpiece (7).

12. A pipe or the like according to claim 11, **characterized in that** the inside of the skirt (6) is integral with at least one transverse annular sealing gasket (62) for engaging the male endpiece (7).

13. A female end ring for making a pipe or the like according to any one of claims 1 to 12, presenting a longitudinal axis (9) and constituting:
- firstly a longitudinal ferrule (5) defined amongst other things by a longitudinal inside peripheral face (23); and
- secondly a longitudinal skirt (6) situated axially in line with the ferrule (5),
the ring being **characterized in that**:
· the ferrule (5) is elastically expandable circumferentially;
· said inside peripheral face (23) flares in the longitudinal direction (13) going away from the transition (22) between the ferrule (5) and the skirt (6);
· said inside peripheral face (23) presents a continuous annular portion in relief (29) that is elastically and/or plastically compressible transversely and that is integral with the ferrule (5);
· said continuous annular portion in relief (29) is in the form of a rib (29); and
· said rib (29) is longitudinally substantially further from said transition (22) than it is from a free edge (25) that the ferrule (5) presents longitudinally remote from said transition.

14. A female end ring according to claim 13, **characterized in that** it presents abutment means (34) on the inside at the transition (22) between the ferrule (5) and the skirt (6), the abutment means projecting transversely relative to said inside peripheral face (23).

15. A female end ring according to claim 14, **characterized in that** the skirt (6) also presents a longitudinal inside peripheral face (26) and **in that** the abutment means (34) also project transversely relative thereto.

16. A female end ring according to claim 15, **characterized in that** the abutment means (34) comprise a circumferentially continuous transverse annulus (34) of uniform longitudinal dimension.

17. A female end ring according to any one of claims 13 to 16, **characterized in that** the inside of the skirt (6) is shaped (63) suitably to receive and to hold at least one transverse annular sealing gasket (62).

18. A female end ring according to claim 17, **characterized in that** the inside of the skirt (6) is integral with at least one transverse annular sealing gasket (62).

19. A female end ring according to any one of claims 13 to 18, **characterized in that** the ferrule (5) and the skirt (6) present respective shapes and transverse dimensions suitable for enabling a plurality of rings (4) to be nested releasably and coaxially by nesting the ferrule (5) of one with the skirt (6) of another.

20. A method of manufacturing a pipe or the like according to any one of claims 1 to 12, the pipe or the like being of the type comprising:
- a concrete cylinder (2) possessing at least one annular end (3) of determined longitudinal axis (9), defined amongst other things by a longitudinal outside peripheral face (12) and by a transverse front face 11;
- a female end ring (4) coaxial with said end (3) and secured thereto, the ring consisting of:
- firstly a longitudinal ferrule (5) for securing to the cylinder (2), the ferrule being defined amongst other things by a longitudinal inside peripheral face (23) fitting snugly against said outside peripheral face (12) in the immediate vicinity of said front face (11); and
- secondly a longitudinal skirt (6) projecting longitudinally over said front face (11) to engage coaxially on a male endpiece (7) of another pipe (8) or the like,
said method comprising an initial step consisting in prefabricating the ring (4) and being **characterized in that** it further comprises the following succession of steps:
a) prefabricating the cylinder (2) independently of the ring, the ring (4) being in accordance with any one of claims 13 to 19 and being dimensioned in such a manner that, at a determined longitudinal distance from the transition (22) between the ferrule (5) and the skirt (6), and in the absence of the ring (4) being expanded circumferentially, said inside peripheral face (23) presents transverse dimensions that are smaller than those presented by said outside peripheral face (12) at the same longitudinal distance from said front face (11), but sufficiently close thereto to be capable of being increased to said dimensions by putting the ferrule (5) under circumferential elastic tension; and
b) engaging the ferrule (5) coaxially on the annular end (3) of the cylinder (2) to a determined relative position in which said transition (22) coincides longitudinally with said front face (11), and fastening the ferrule (5) to the cylinder (2) in said determined relative position by placing said ferrule (5) in a state of circumferential elastic tension providing sealing relative to said outside peripheral face (12) by said inside peripheral face (23) applying thereto transverse pressure that is distributed circumferentially in continuous manner,
and **in that**:
· respectively during the initial step and during step a), the ring (4) and the cylinder (2) are prefabricated in such a manner that said outside peripheral face (12) and said inside peripheral face (23) flare relative to their respective longitudinal axes (9) in a longitudinal direction (13) going away respectively from said front face (11) and from the transition (22) between the ferrule (5) and the skirt (6), and that said inside peripheral face (23) presents a rib (29) forming a continuous annular portion in relief that is elastically and/or plastically compressible transversely, that is integral with the ferrule (5), and that is longitudinally substantially further from said transition (22) than it is from a free edge (25) that the ferrule (5) presents longitudinally remote from said transition (22);
· between steps a) and b), a ring of adhesive (52), in particular a continuous ring, is deposited on a localized zone of said outside peripheral face (12) selected in such a manner that when implementing step b) and thereafter said zone constitutes a zone of mutual contact via said adhesive (52) and of application of said transverse pressure, and that, while the ferrule (5) is being engaged coaxially onto the annular end (3) of the cylinder (2), during implementation of step b), the rib (29) makes it easy for the ferrule (5) to entrain said adhesive (52) and create a film of said adhesive (52); and
· said adhesive (52) is selected in such a manner that while in the fresh state it constitutes a lubricant associating implementation of step b) by progressive forced engagement of the ferrule (5) coaxially onto the annular end (3) of the cylinder (2), and subsequently serves to fasten them together.

21. A method according to claim 20, **characterized in that** said circumferential elastic tension is such that said inside peripheral face (23) is fastened in part to said outside peripheral face (12) by the mutual friction effect that results from said transverse pressure.

22. A method according to claim 21, **characterized in that** said effect is reinforced by banding the ferrule (5) in said determined relative position.

23. A method according to any one of claims 20 to 22, **characterized in that** coaxial engagement of the ferrule (5) on the annular end (3) of the cylinder (2) during step b) is facilitated by heating the ferrule (5).

24. A method according to any one of claims 20 to 23, **characterized in that** during step a) the cylinder (2) is prefabricated in such a manner that said outside peripheral face (12) flares more than does said inside peripheral face (23) relative to their respective longitudinal axes (9).

25. A method according to any one of claims 20 to 24, **characterized in that**:
- between steps a) and b), a sealing gasket (18) of elastically compressible material is put into place on said outside peripheral face (12) at least in the immediate vicinity of said front face (11);
- said gasket (18) is selected in such a manner that it is in the form of a film (18);
- said film (18) is selected and placed in such a manner that it extends from said front face (11) over a longitudinal dimension that is less than the longitudinal dimensions respectively of said outside peripheral face (12) and of said inside peripheral face (23); and
- during step b), said gasket (18) is put into elastic transverse compression stress between said inside peripheral face (23) and said outside peripheral face (12).

26. A method according to claim 25, **characterized in that**, during step a), the cylinder (2) is prefabricated in such a manner that said outside peripheral face (23) presents a localized annular setback (17) in the immediate vicinity of said front face (11), and **in that** between steps a) and b), said gasket (18) is put into place by being received over a fraction of its transverse dimension in said setback (16).

27. A method according to claim 25 or claim 26, **characterized in that**;
- between steps a) and b), after said film (18) has been put into place, a ring of adhesive (53), in particular a continuous ring, is deposited on a localized zone of said film (18) selected in such a manner that during implementation of step b) and subsequently, said zone constitutes a zone of mutual contact via said adhesive (53) and of application of said transverse pressure, and that, while the ferrule (5) is being engaged coaxially onto the annular end (3) of the cylinder (2), during implementation of step b), the rib (29) makes it easy for the ferrule (5) to entrain said adhesive (53) and create a film of said adhesive (53); and
- said adhesive (53) is selected in such a manner that while in the fresh state it constitutes a lubricant associating implementation of step b) by progressive forced engagement of the ferrule (5) coaxially onto the annular end (3) of the cylinder (2), and subsequently serves to fasten them together.

28. A method according to any one of claims 20 to 27, **characterized in that** for a ring (4) in accordance with any one of claims 14 to 16, during step b) coaxial engagement of the ferrule (5) on the annular end (3) of the cylinder (2) is stopped when the longitudinal abutment means (34) come into abutment against said front face (11).

29. A method according to claim 28, as it depends on any one of claims 25 to 27, **characterized in that** between steps a) and b), an annular transverse rim of said film (18) is formed on said front face (11), and **in that** during step b), said coaxial engagement is stopped when the longitudinal abutment means (34) come into abutment against said front face (11) via said rim.

30. A method acorn to any one of claims 20 to 29, **characterized in that** for a ring (4) in accordance with claim 17, in step a) or after step b), at least one transverse annular sealing gasket (62) for engaging the male endpiece is secured to the inside of the skirt (6).
